# EUROPÄISCHE PATENTSCHRIFT

(11) **EP 3 768 499 B1**
(45) Veröffentlichungstag und Bekanntmachung des Hinweises auf die Patenterteilung: **24.01.2024**
(21) Anmeldenummer: 19709022.8
(22) Anmeldetag: 04.03.2019
(51) Int. Cl.: B29C 71/00, B29C 64/379, B33Y 40/00, B33Y 40/20

(54) **VERFAHREN UND VORRICHTUNG ZUM CHEMISCHEN GLÄTTEN VON KUNSTSTOFFTEILEN**
PROCESS AND APPARATUS FOR CHEMICAL SMOOTHING OF PLASTIC PARTS
PROCÉDÉ ET DISPOSITIF DE LISSAGE CHIMIQUE DE PIÈCES EN MATIÈRE PLASTIQUE

(30) Priorität: 22.03.2018 DE 102018002401
(43) Veröffentlichungstag der Anmeldung: 27.01.2021
(73) Patentinhaber: LuxYours GmbH, 82152 Planegg (DE)
(72) Erfinder: PFEFFERKORN, Florian, 80689 München (DE)
(74) Vertreter: Bosch Jehle Patentanwaltsgesellschaft mbH
(86) Internationale Anmeldenummer: PCT/EP2019/055312
(87) Internationale Veröffentlichungsnummer: WO 2019/179755

(56) Entgegenhaltungen:
- RU-C1- 2 625 848
- US-A1- 2008 169 585
- US-A1- 2009 321 972

## Beschreibung

Der Gegenstand der Erfindung sind ein Verfahren zum chemischen Glätten eines Kunststoffteils gemäß Anspruch 1 und eine Vorrichtung zum chemischen Glätten eines Kunststoffteils gemäß Anspruch 11. Insbesondere betrifft die Erfindung ein Verfahren und eine Vorrichtung zum chemischen Glätten, mit deren Hilfe die Einwirkdauer von Lösemitteldampf zur Glättung des Kunststoffteils exakt kontrollierbar ist.

Zur Erzeugung von Bauteilen werden heute häufig 3D-Druckverfahren eingesetzt. Mit Hilfe von 3D-Druckverfahren, die durch sog. 3D-Drucker umgesetzt werden, können aus den Daten am Computer erzeugter dreidimensionaler Zeichnungen dreidimensionale Modelle bzw. "Ausdrucke" erzeugt werden.

Mit Hilfe von 3D-Druckverfahren erzeugte Bauteile erfüllen ganz unterschiedliche Aufgaben. Während noch vor wenigen Jahren die Bauteile häufig nur als Anschauungs-, Montage- oder Funktionsmuster verwendet wurden, werden 3D-Druck-Bauteile in jüngster Zeit immer häufiger auch als Endbauteile für den Serieneinsatz verwendet. Die Fertigung von 3D-Druck-Bauteilen für den Serieneinsatz fällt unter den Begriff der sog. generativen Fertigungsverfahren (engl. Additive Manufacturing).

Serienbauteile haben aber neben der grundlegenden formgebenden Funktion auch weitere Kriterien zu erfüllen. Eine u.a. wichtige Eigenschaft ist die Oberflächengüte. 3D-Druck-Bauteile benötigen aus verschiedenen Gründen eine Verbesserung der Oberflächengüte. Zunächst ist festzuhalten, dass 3D-Druck-Bauteile aufgrund deren schichtweiser Erzeugung verfahrensbedingt Schichtstufen aufweisen. Je schneller ein Bauteil aufgebaut werden soll, desto stärker sind diese Schichtstufen ausgeprägt. Aus dickeren Schichten kann schneller ein voluminöses Objekt aufgebaut werden.

Darüber hinaus arbeiten einige 3D-Druckverfahren mit pulverförmigen Werkstoffen (wie z.B. in der internationalen Patentanmeldung mit der Veröffentlichungsnummer WO 88/02677 A2 beschrieben). Die Oberflächengüte der mit Hilfe eines 3D-Druckverfahrens gedruckten Bauteile weist bei diesen Verfahren zusätzlich zu den Schichtstufen noch eine granulare Rauigkeit auf, die maßgeblich von der Oberflächengüte der Pulverpartikel beeinflusst wird.

Manche 3D-Druckverfahren benötigen eine mechanische Nachbearbeitung der Bauteile, z.B. um Stützstrukturen zu entfernen. An den Stellen, die mechanisch nachbearbeitet sind, sind klar die Unterschiede zu den nicht bearbeiteten Bereichen zu erkennen; die Unregelmäßigkeiten bedeuten einen Mangel für das Bauteil.

Aufgrund der vorstehend genannten grundlegenden Unzulänglichkeiten der 3D-Druck-Bauteile stellt es eine Herausforderung dar, die Anforderungen zu erfüllen, die bei der Produktion von Serienbauteilen eingehalten werden müssen. Dazu gehören insbesondere die Verschleiß- und Abriebfestigkeit der Oberfläche des Bauteils, Reinigbarkeit und Reibwert der Oberfläche, Dicht-Eigenschaften und Dichtigkeit, Maßgenauigkeit, Einhalten vorgegebener fluiddynamischer Eigenschaften, ästhetischer Glanz und Homogenität der Oberflächenerscheinung.

Die genannten Anforderungen gelten sowohl für die Innen- als auch die Außenflächen der Bauteile.

Traditionelle Methoden der Oberflächenveredelung wie Schleifen, Bearbeiten, Lackieren und Sandstrahlen erzielen bei Kunststoffteilen, wie etwa den vorstehend beschriebenen 3D-Druck-Bauteilen, häufig nicht das gewünschte Ergebnis oder bringen einen zusätzlichen Stoff auf die Oberfläche auf, der dann wieder abplatzen kann und extra regulatorisch zertifiziert werden muss. Auch haben die traditionellen Verfahren Schwierigkeiten mit Flächen im Inneren der Kunststoffteile, z.B. in Leitungen oder Kanälen.

In der internationalen Patentanmeldung mit Veröffentlichungsnummer WO 03/089218 A1 wird ein Lösemitteldampfbad beschrieben, in das von oben ein zu glättendes Objekt eingetaucht wird. Hierbei ist die Kammer nach oben hin geöffnet und Lösemitteldampf kann austreten. Des Weiteren weist ein Lösemitteldampfbecken, wie beschrieben, je nach verdampftem Lösemittel, unterschiedliche Konzentrationen und Temperaturen des Dampfes auf. Unten im Becken wird sich stärker gesättigter, aber gleichzeitig kühlerer Dampf befinden; weiter oben im Becken nimmt die Konzentration ab. Ein solches Verfahren ist schwer kontrollier- und automatisierbar.

In der internationalen Veröffentlichung WO 2011/145960 A1 ist ein Aufbau beschrieben, der für den Bediener eine sichere, gehauste Anordnung darstellt. Dennoch ermöglicht das beschriebene Verfahren keine Möglichkeit, die Sättigung des Dampfes und die Temperatur des zu glättenden Objekts zu kontrollieren.

In beiden genannten Druckschriften ist eine vorbereitende sowie nachgelagerte Behandlung der Bauteile nicht beschrieben. Werden allerdings die Temperatur und die Menge an Lösemittel, das auf dem Bauteil kondensiert und dann wieder abtrocknet, nicht richtig eingestellt, weisen die Bauteile anschließend Mängel auf, die für Serienbauteile nicht tragbar sind. Diese Mängel können Flecken auf den Bauteilen sowie verlaufenes bzw. verspültes Material verursachen, das sich im Extremfall auch als ungewollte Materialansammlungen an der Unterseite der Bauteile verfestigen kann.

Die Druckschrift RU 2 625 848 C1 beschreibt eine Vorrichtung zur automatisierten Endbearbeitung von Produkten, die durch 3D-Druck hergestellt wurden. Die Vorrichtung weist eine Arbeitskammer 1 auf, die mit einer hermetisch versiegelten transparenten oberen Abdeckung 2 und einem Gitter 3 oder einem Haken 4 zur Positionierung eines zu bearbeitenden Gegenstands ausgestattet ist. Neben der Arbeitskammer befindet sich ein Reaktor 6, der durch Kanäle mit dem oberen 7 und unteren 8 Teil der Arbeitskammer verbunden ist, wobei ein Lüfter 9 im unteren Kanal installiert ist. Am Boden des Reaktors ist ein Peltier-Element 13 mit einer seiner Seiten angebracht, wobei auf der anderen Seite des Peltier-Elements 13 ein Kühler 15 angeordnet ist. In den unteren Teil des Reaktors kann über eine Rohrzufuhr mit Hilfe einer reversiblen Dosierpumpe 18 Lösungsmittel aus einem externen Lösungsmittelspeichertank 20 eingeführt werden.

Aufgabe der vorliegenden Erfindung ist es daher, ein serientaugliches Verfahren und eine entsprechende Vorrichtung bereitzustellen, die die genannten Unzulänglichkeiten des vorstehend beschriebenen Stands der Technik beseitigen, insbesondere ein Verfahren und eine entsprechende Vorrichtung zur chemischen Glättung von Kunststoffteilen bereitzustellen, die sowohl eine sichere Arbeitsumgebung ermöglichen, als auch den chemischen Glättungsprozess in den relevanten Eigenschaften kontrollierbar machen. Diese Aufgabe wird durch das Verfahren zum chemischen Glätten eines durch selektives schichtweises Verfestigen eines Aufbaumaterials hergestellten Kunststoffteils mit den Merkmalen gemäß Anspruch 1 und durch die Vorrichtung zum chemischen Glätten eines durch selektives schichtweises Verfestigen eines Aufbaumaterials hergestellten Kunststoffteils mit den Merkmalen gemäß Anspruch 11 gelöst. Vorteilhafte Ausgestaltungen der vorliegenden Erfindung sind in den Unteransprüchen 2 bis 10 und 12 bis 18 angegeben.

Gemäß einem ersten Aspekt der Erfindung wird ein Verfahren zum chemischen Glätten eines durch selektives schichtweises Verfestigen eines Aufbaumaterials hergestellten Kunststoffteils bereitgestellt, das die folgenden Schritte umfasst: Temperieren des Kunststoffteils auf eine erste Temperatur; Temperieren von Lösemitteldampf, der ein Lösemittel umfasst, auf eine zweite Temperatur; Einwirkenlassen des auf die zweite Temperatur temperierten Lösemitteldampfes auf das Kunststoffteil für eine bestimmte Zeitdauer, wobei das Einwirkenlassen des Lösemitteldampfes auf das Kunststoffteil bewirkt, dass eine äußere Schicht des Kunststoffteils verflüssigt wird; und Abführen zumindest eines Teils des Lösemitteldampfes nach der bestimmten Zeitdauer, wobei das Kunststoffteil vom Beginn des Temperierens des Kunststoffteils bis zum Abschluss des Abführens des Lösemitteldampfes örtlich ruht.

Ein Verfahren für die Herstellung des Kunststoffteils durch selektives schichtweises Verfestigen eines Aufbaumaterials ist beispielsweise unter dem Namen "selektives Lasersintern" oder "selektives Laserschmelzen" bekannt. Dabei wird wiederholt eine dünne Schicht eines pulverförmigen Aufbaumaterials aufgebracht und das Aufbaumaterial in jeder Schicht durch selektives Bestrahlen von Stellen, die einem Querschnitt des herzustellenden Objekts entsprechen, mit einem Laser selektiv verfestigt. Das pulverförmige Aufbaumaterial ist dabei zweckmäßigerweise ein Kunststoffpulver. Typischerweise werden Verfahren zur Herstellung des Kunststoffteils durch selektives schichtweises Verfestigen eines Aufbaumaterials beim Rapid Prototyping oder Additive Manufacturing verwendet. Unter den Begriff Additive Manufacturing fallen auch 3D-Druckverfahren zur Herstellung von 3-dimensionalen Objekten.

Erfindungsgemäß umfasst der Schritt des Temperierens des Kunststoffteils: Positionieren des Kunststoffteils in einer ersten mit einem Gas oder Gasgemisch gefüllten Kammer. Bevorzugt umfasst der Schritt des Temperierens des Kunststoffteils: Temperieren der ersten Kammer auf eine erste Temperatur, um damit das Kunststoffteil zumindest annähernd auf die erste Temperatur zu temperieren. Erfindungsgemäß umfasst der Schritt des Temperierens des Lösemitteldampfes: Füllen einer zweiten Kammer mit einem Lösemitteldampf, der ein Lösemittel umfasst. Bevorzugt umfasst der Schritt des Temperierens des Lösemitteldampfes: Temperieren der zweiten Kammer auf eine zweite Temperatur, um damit den Lösemitteldampf zumindest annähernd auf die zweite Temperatur zu temperieren. Vorzugsweise wird vor dem Einwirkenlassen des Lösemitteldampfes auf das Kunststoffteil der Lösemitteldampf von der zweiten Kammer in die erste Kammer eingeleitet. Bevorzugt umfasst der Schritt des Abführens zumindest eines Teils des Lösemitteldampfes: Abführen zumindest eines Teils des Lösemitteldampfes von der ersten Kammer in die zweite Kammer nach der bestimmten Zeitdauer. Bevorzugt umfasst der Schritt des Abführens zumindest eines Teils des Lösemitteldampfes: Einleiten von Gas oder Gasgemisch in die erste Kammer. Das Gas oder Gasgemisch ist dabei vorteilhafterweise auf eine bestimmte Temperatur temperiert. Es ist zweckmäßig, wenn das Gas oder Gasgemisch aus einer dritten Kammer in die erste Kammer eingeleitet wird.

Das Kunststoffteil wird in der ersten Kammer positioniert und verbleibt vorzugsweise während des gesamten Verfahrensablaufs in der ersten Kammer. Dies hat den Vorteil, dass das zu glättende Kunststoffteil nicht in den Lösemitteldampf hinbewegt und nach Exposition des Kunststoffteils im Lösemitteldampf wieder daraus herausbewegt werden muss. Da erfindungsgemäß während der chemischen Glättung das Zu- und Abführen des Lösemitteldampfes gesteuert, nicht aber die Bewegung des Kunststoffteils gesteuert wird, wird ein Entweichen des Lösemitteldampfes aus den vorgesehenen Kammern verhindert. Bei der Durchführung des erfindungsgemäßen Verfahrens wird daher verhindert, dass der Benutzer mit dem Lösemittedampf in Kontakt kommt.

Dadurch, dass der Lösemitteldampf von der zweiten Kammer in die erste Kammer eingeleitet wird, und nach einer bestimmten Zeitdauer wieder abgeführt werden kann, wird sichergestellt, dass das Kunststoffteil nach erfolgter Einwirkung des Lösemitteldampfes auf eine äußere Schicht des Kunststoffteils in einer Umgebung abtrocknen kann, die frei von in der Regel gesundheitsschädlichen oder-gefährdenden Lösemitteln ist. Beim Entfernen des Kunststoffteils aus der ersten Kammer befindet sich das Kunststoffteil, das dann vorteilhafterweise geglättet ist, wieder in einer Umgebung, die zumindest zum überwiegenden Teil das Gas oder Gasgemisch umfasst, mit dem die erste Kammer zu Beginn des erfindungsgemäßen Verfahrens gefüllt war. Das Gas oder Gasgemisch, mit dem die erste Kammer zu Beginn gefüllt ist, ist vorzugsweise Luft.

Darüber hinaus stellen das Einleiten des Lösemitteldampfes von der zweiten Kammer in die erste Kammer, das Einwirkenlassen des Lösemitteldampfes auf das Kunststoffteil für eine bestimmte Zeitdauer sowie das Abführen eines überwiegenden Teils des Lösemitteldampfes von der ersten Kammer in die zweite Kammer nach der bestimmten Zeitdauer Schritte dafür dar, das Einwirken des Lösemitteldampfes auf das Kunststoffteil gezielt zu kontrollieren. Die bestimmte Zeitdauer hängt beispielsweise von der Konzentration des Lösemittels im Lösemitteldampf ab. Je geringer die Konzentration des Lösemittels im Lösemitteldampf, desto länger sollte die bestimmte Zeitdauer gewählt werden. In anderen Worten, je stärker der Lösemitteldampf mit Lösemittel gesättigt ist, desto kürzer die bestimmte Zeitdauer. Die bestimmte Zeitdauer liegt zweckmäßig im Bereich von 0 bis 10 Minuten, bevorzugt zwischen 0 und 1 Minute, besonders bevorzugt zwischen 0 und 30 Sekunden, sehr bevorzugt zwischen 0 und 5 Sekunden. Dadurch, dass das Einwirkenlassen des Lösemitteldampfes auf das Kunststoffteil bewirkt, dass eine äußere Schicht des Kunststoffteils verflüssigt wird, wird das Kunststoffteil geglättet. Vorhandene Stufen, Kerben, Unregelmäßigkeiten etc. auf der Oberfläche des Kunststoffteils durch die Verflüssigung fließend ineinander über, wodurch eine Glättung erfolgt. Das Lösemittel ist zweckmäßigerweise derart gewählt, dass es mit dem Material, aus dem das Kunststoffteil hergestellt ist, reagiert und dessen Verflüssigung bewirkt.

Durch das Abführen des Lösemitteldampfes zurück in die zweite Kammer kann der Lösemitteldampf für weitere Durchläufe des erfindungsgemäßen Verfahrens wiederverwendet werden.

Ebenfalls zur gezielten Kontrolle des Einwirkens des Lösemitteldampfes auf das Kunststoffteil tragen bei, dass die erste Kammer auf eine bestimmte erste Temperatur, und die zweite Kammer auf eine bestimmte zweite Temperatur temperiert werden. Durch das Temperieren der ersten Kammer wird auch das Kunststoffteil auf zumindest annähernd die erste Temperatur erwärmt / temperiert. Die Wahl der Temperatur in der zweiten Kammer erlaubt es, die Temperatur des Lösemitteldampfes einzustellen. Durch die Wahl der Temperatur der zweiten Kammer kann damit auch die Konzentration des Lösemittels im Lösemitteldampf eingestellt werden, insbesondere die maximale Konzentration des Lösemittels im Lösemitteldampf, das heißt, die Konzentration bei Sättigung des Lösemitteldampfes. Die Konzentration des Lösemittels im Lösemitteldampf kann bevorzugt auch dadurch eingestellt werden, dass eine bestimmte Menge flüssigen Lösemittels in die zweite Kammer eingebracht wird und dort verdampft wird. Letzteres kann zweckmäßig dadurch umgesetzt werden, dass das Lösemittel auf die entsprechende Siede- / Verdampfungstemperatur in der zweiten Kammer erhitzt wird. Es ist weiter auch möglich, dass die Konzentration des Lösemittels im Lösemitteldampf dadurch eingestellt wird, dass die zweite Kammer nur teilweise mit Lösemitteldampf geflutet wird, d.h. dass eine bestimmte Menge an Lösemitteldampf einer bestimmten Temperatur und mit einem bestimmten Sättigungsgrad in die zweite Kammer eingebracht wird und dort mit in der zweiten Kammer vorhandener Luft einer anderen oder gleichen bestimmten Temperatur vermischt wird. Bevorzugt liegt der Sättigungsgrad des Lösemittels im Lösemitteldampf zwischen 10 % und 95 %, besonders bevorzugt zwischen 30 % und 90 %, sehr bevorzugt zwischen 50 % und 70 %.

Bevorzugt ist die zweite Temperatur größer ist als die erste Temperatur. Zweckmäßig beträgt die erste Temperatur mindestens 50 °C, vorzugsweise mindestens 70 °C, besonders bevorzugt mindestens 90 °C, sehr bevorzugt mindestens 110 °C. Zweckmäßig beträgt die zweite Temperatur mindestens 75 °C, vorzugsweise mindestens 90 °C, besonders bevorzugt mindestens 105 °C, sehr bevorzugt mindestens 120 °C. Dadurch, dass die Temperatur in der ersten Kammer geringer ist als die Temperatur in der zweiten Kammer, kondensiert das Lösemittel nach Einleiten des Lösemitteldampfes in die erste Kammer auf der Oberfläche des Kunststoffteils. Weist das Kunststoffteil Innenflächen auf, wie z.B. Öffnungen, Kanäle, Bohrungen, so werden diese Innenflächen erfindungsgemäß zur Oberfläche des Kunststoffteils gezählt. Das heißt, erfindungsgemäß kann auch eine Glättung von Innenflächen erfolgen.

Besonders bevorzugt ist der Lösemitteldampf in der zweiten Kammer mit dem Lösemittel gesättigt, bevor er in die erste Kammer eingeleitet wird. Das heißt, der Lösemitteldampf kann kein weiteres Lösemittel im Dampfzustand mehr aufnehmen. Der Lösemitteldampf setzt sich vorzugsweise zusammen aus dem Lösemittel in Dampfform und einem weiteren Gas oder Gasgemisch, bevorzugt Luft. Im Falle des gesättigten Lösemitteldampfes reicht es aus, dass die Temperatur in der ersten Kammer geringer ist als die Temperatur in der zweiten Kammer. Ist der Lösemitteldampf nicht vollständig gesättigt, so erfolgt eine Kondensation des Lösemittels auf dem auf die Temperatur der ersten Kammer temperierten Kunststoffteils in der ersten Kammer, wenn die erste Temperatur kleiner ist als die Taupunkttemperatur des Lösemittels bei der gegebenen Konzentration des Lösemittels im Lösemitteldampf.

Die Taupunkttemperatur ist die Temperatur, bei der das Lösemittel, das bei einer gegebenen Temperatur eine bestimmte Konzentration im Lösemitteldampf hat, kondensiert.

Schließlich ist es durch das separate Einstellen der ersten und zweiten Temperatur möglich, die Temperaturdifferenz zwischen erster und zweiter Kammer einzustellen. Diese Temperaturdifferenz bestimmt die Geschwindigkeit, mit der das Lösemittel auf dem Kunststoffteil kondensiert. Darüber hinaus bestimmt die Temperaturdifferenz auch die Menge des Lösemittels, das auf dem Kunststoffteil kondensiert. In anderen Worten ermöglicht es die Wahl der ersten und zweiten Temperatur, bzw. der Temperaturdifferenz, zu kontrollieren, mit welcher Menge und mit welcher Geschwindigkeit die Kondensation des Lösemittels erfolgt. Insbesondere kann durch das Temperieren der ersten Kammer und damit des zu glättenden Kunststoffteils verhindert werden, dass letzteres einen Temperaturschock erfährt, der zu einem zu starken Niederschlag oder einer "Überflutung" der Oberfläche des Kunststoffteils mit Lösemittel-Kondensat führen würde.

Erfindungsgemäß können damit die Temperatur des Lösemitteldampfes, die Temperatur des zu glättenden Bauteils vor und nach Kontakt mit dem Lösemitteldampf, die Konzentration des Lösemittels im Lösemitteldampf, zweckmäßigerweise die Sättigungskonzentration, und die Einwirkdauer des Lösemitteldampfes kontrolliert werden. Während des gesamten Verfahrensablaufs verbleibt das Kunststoffteil in ruhender Position.

Vorteilhafterweise umfasst das Verfahren weiter den folgenden Schritt: Trocknen des Kunststoffteils, zweckmäßigerweise in der ersten Kammer, nach dem Abführen des Lösemitteldampfes. Vorzugsweise verbleibt das Kunststoffteil während des Trocknens in Ruhe. Während des Trocknens wird die Temperatur der ersten Kammer vorzugsweise auf eine bestimmte dritte Temperatur eingestellt. Die dritte Temperatur kann sich von der ersten Temperatur unterscheiden. Während des Trocknens verdampft das Lösemittel von der Oberfläche des Kunststoffteils. Dadurch verfestigt sich diese wieder. Um das verdampfte Lösemittel aus der ersten Kammer zu entfernen, wird dieses bevorzugt aus der ersten Kammer abgesaugt. Dazu ist es von Vorteil, dass an die erste Kammer eine Absaugvorrichtung angekoppelt ist, die dazu ausgelegt ist, verdampftes Lösemittel aus der ersten Kammer abzusaugen. Durch das Absaugen des verdampften Lösemittels wird das Risiko minimiert, dass ein Benutzer beim Entfernen des Kunststoffteils aus der ersten Kammer nach erfolgter Trocknung mit dem Lösemittel in Berührung kommt.

Erfindungsgemäß umfasst der Schritt des Einleitens des Lösemitteldampfes von der zweiten Kammer in die erste Kammer umfasst, dass das Volumen der zweiten Kammer verringert wird. Die Verringerung des Volumens der zweiten Kammer kann darin bestehen, dass das dem Lösemitteldampf zur Verfügung stehende Volumen in der zweiten Kammer verringert wird. Es ist zweckmäßig, wenn der Schritt des Abführens zumindest eines Teils des Lösemitteldampfes von der ersten Kammer in die zweite Kammer umfasst, dass das Volumen der zweiten Kammer vergrößert wird. Bevorzugt ist die erste Temperatur derart gewählt, dass die Dichte des Gases oder Gasgemischs vor dem Einleiten des Lösemitteldampfes geringer ist als die Dichte des Lösemitteldampfes in der zweiten Kammer. Durch das Verkleinern des Volumens der zweiten Kammer beim Einleiten des Lösemitteldampfes von der zweiten in die erste Kammer wird gewährleistet, dass zumindest ein großer Teil des Lösemitteldampfes in die erste Kammer strömt. Die größere Dichte des Lösemitteldampfes erzeugt beim Einleiten in die erste Kammer einen Auftrieb-Effekt auf das Gas oder das Gasgemisch geringerer Dichte in der ersten Kammer. Dadurch kann gewährleistet werden, dass ein erheblicher Teil des zu Beginn in der ersten Kammer befindlichen Gases oder Gasgemischs aus der ersten Kammer verdrängt wird. Beim Abführen des Lösemitteldampfes hat dessen größere Dichte den Vorteil, dass durch das erneute Füllen der ersten Kammer mit dem Gas oder dem Gasgemisch der Lösemitteldampf in die zweite Kammer zurückgedrängt wird. Die Reduzierung des Volumens der zweiten Kammer kann darüber hinaus einen erhöhten Druck in der zweiten Kammer bewirken, der dazu führt, dass der Lösemitteldampf in die erste Kammer getrieben wird. Durch die Volumenvergrößerung, bevorzugt auf das Volumen vor der Volumenverkleinerung beim Einleiten des Lösemitteldampfes in die erste Kammer, steht dem Lösemitteldampf wieder dasselbe Volumen zur Verfügung wie zu Beginn des Glättungsprozesses. Damit kann der Lösemitteldampf durch Temperieren auf die zweite Temperatur wieder in nahezu denselben Zustand versetzt werden wie vor dem Einleiten in die erste Kammer. Darüber hinaus nimmt der Druck in der zweiten Kammer ab. Der Druckunterschied bewirkt eine Sogwirkung auf den Lösemitteldampf in der ersten Kammer. Damit kann der Lösemitteldampf für weitere Durchläufe wiederverwendet werden.

Es ist von Vorteil, wenn das Füllen der zweiten Kammer mit dem Lösemitteldampf umfasst, dass der Lösemitteldampf in der zweiten Kammer homogenisiert, vorzugsweise umgewälzt, wird. Das Homogenisieren bzw. Umwälzen bewirkt, dass der Lösemitteldampf homogen in der zweiten Kammer verteilt ist. Weiter ist es von Vorteil, wenn während des Einwirkenlassens des Lösemitteldampfes auf das Kunststoffteil in der ersten Kammer der Lösemitteldampf in der ersten Kammer homogenisiert, vorzugsweise umgewälzt, wird. Dies bewirkt, dass der Lösemitteldampf in der ersten Kammer homogen verteilt ist. Dadurch erfolgt die Kondensation möglichst gleichmäßig auf der Oberfläche des Kunststoffteils.

Gemäß einem zweiten Aspekt der Erfindung wird ein Verfahren zum Glätten eines Kunststoffteils bereitgestellt, das die folgenden Schritte umfasst: Positionieren des Kunststoffteils in einer ersten mit einem Gas oder Gasgemisch gefüllten Kammer; Füllen einer zweiten Kammer mit einem Lösemitteldampf, der ein Lösemittel umfasst; und mehrmaliges Durchlaufen der Schritte vom Temperieren der ersten Kammer bis zum Abführen zumindest eines Teils des Lösemitteldampfes gemäß dem ersten Aspekt der Erfindung. Vorzugsweise wird bei jedem Durchlaufen die bestimmte Zeitdauer, während der der Lösemitteldampf auf das Kunststoffteil einwirken gelassen wird, unterschiedlich gewählt. Es kann zweckmäßig sein, die bestimmte Zeitdauer von Durchlauf zu Durchlauf zu verlängern.

Das Verfahren gemäß dem zweiten Aspekt der Erfindung unterscheidet sich von dem Verfahren nach dem ersten Aspekt der Erfindung insbesondere dadurch, dass der Lösemitteldampf mehrmals von der zweiten Kammer in die erste Kammer eingeleitet und wieder abgeführt wird. Das Kunststoffteil wird damit mehrmals dem Lösemitteldampf ausgesetzt. Bei jedem Durchlaufen können die erste und/oder zweite Temperatur im Vergleich zum vorangegangen Durchlauf oder zu vorangegangen Durchläufen unterschiedlich gewählt werden. Bevorzugt wird das Kunststoffteil nach jedem Durchlaufen zumindest teilweise getrocknet.

Für das gesamte Verfahren oder getrennt für jeden Durchlauf können die vorteilhaften, bevorzugten und zweckmäßigen Ausgestaltungen des Verfahrens gemäß dem ersten Aspekt der Erfindung angewandt werden. Die Vorteile sind dieselben wir vorstehend im Zusammenhang mit dem ersten Aspekt der Erfindung genannt.

Darüber hinaus kann durch das mehrmalige Durchlaufen der genannten Verfahrensschritte kontrolliert verhindert werden, dass eine Übersättigung der Oberfläche des Kunststoffteils mit Lösemittel-Kondensat eintritt, was zu Läufer- und Tropfenbildung führen würde. Durch das Trocknen des Kunststoffteils zwischen zwei Durchläufen kann ein optimales Abtrocknen der Oberfläche erzielt werden. Dies trägt dazu bei, dass keine Flecken auf der Oberfläche des Kunststoffteils entstehen.

Erfindungsgemäß wird des Weiteren eine Vorrichtung zum chemischen Glätten eines Kunststoffteils bereitgestellt, die eine erste Kammer, eine zweite Kammer und ein Antriebselement umfasst. Die erste Kammer ist mit einem Gas oder Gasgemisch befüllbar, und sie weist ein Positionierungsmittel zur Aufnahme des Kunststoffteils sowie ein erstes Heizmittel zum Temperieren der ersten Kammer auf eine erste Temperatur auf. Die zweite Kammer ist zur Aufnahme eines Lösemitteldampfes vorgesehen, der bei Einwirken auf das Kunststoffteil bewirkt, dass eine äußere Schicht des Kunststoffteils verflüssigt wird, und die zweite Kammer weist ein zweites Heizmittel zum Temperieren der zweiten Kammer auf eine zweite Temperatur auf. Die erste Kammer ist mit der zweiten Kammer durch eine verschließbare Verbindung verbunden. Das Antriebselement ist derart von einer Ausgangsposition in eine Endposition überführbar, dass die Überführung des Antriebselements von der Ausgangsposition in die Endposition bewirkt, dass der Lösemitteldampf von der zweiten Kammer in die erste Kammer eingeleitet wird, wenn sich Lösemitteldampf in der zweiten Kammer befindet und die verschließbare Verbindung zwischen der ersten Kammer und der zweiten Kammer geöffnet ist.

Die erfindungsgemäße Vorrichtung ist derart ausgestaltet, dass damit das erfindungsgemäße Verfahren gemäß erstem Aspekt oder zweitem Aspekt ausgeführt werden kann. Die Vorteile der Erfindung beim Glätten eines Kunststoffteils entsprechen denen, die vorstehend im Zusammenhang mit den Verfahren des ersten Aspekts und zweiten Aspekts der Erfindung angegeben wurden, und werden an dieser Stelle daher nicht mehr wiederholt. Dadurch, dass die erste Kammer mithilfe des ersten Heizmittels auf eine erste Temperatur temperiert werden kann, kann auch das Gas oder Gasgemisch, wenn ein solches in der ersten Kammer eingefüllt ist, zumindest annähernd auf die erste Temperatur temperiert werden. Dadurch, dass die zweite Kammer mithilfe des zweiten Heizmittels auf eine zweite Temperatur temperiert werden kann, kann auch Lösemitteldampf, wenn ein solcher in der zweiten Kammer eingefüllt ist, zumindest annähernd auf die zweite Temperatur temperiert werden. Die erste und zweite Kammer sind vorteilhafterweise jeweils gegenüber der Umgebung thermisch isoliert.

Dadurch, dass die erste Kammer mit der zweiten Kammer durch eine verschließbare Verbindung verbunden ist, wird gewährleistet, dass der Lösemitteldampf von der zweiten Kammer in die erste Kammer eingeleitet werden kann. Es ist von Vorteil, wenn die erste Kammer von der zweiten Kammer thermisch isoliert ist, wenn die verschließbare Verbindung geschlossen ist. Ein Temperaturaustausch zwischen den beiden Kammern erfolgt dann in der Regel nur für eine kurze Zeit, innerhalb der der Lösemitteldampf von der zweiten Kammer in die erste Kammer eingeleitet wird oder innerhalb der der Lösemitteldampf von der ersten Kammer wieder in die zweite Kammer zurückgeführt wird.

Das Antriebselement bewirkt bei geöffneter Verbindung zwischen zweiter und erster Kammer, dass der Lösemitteldampf von der zweiten Kammer in die erste Kammer eingeleitet wird. Dadurch, dass das Antriebselement von einer Ausgangsposition in eine Endposition überführbar ist, erfolgt damit eine Volumen- und/oder Druckänderung der zweiten Kammer. Damit wird ein zügiges Einleiten des Lösemitteldampfes von der zweiten Kammer in die erste Kammer ermöglicht, wenn die verschließbare Verbindung geöffnet ist.

Nachdem eine zur Glättung des Kunststoffteils ausreichende Menge an Lösemitteldampf in die erste Kammer eingeleitet worden ist, kann die verschließbare Verbindung wieder geschlossen werden. Es ist zweckmäßig, wenn die verschließbare Verbindung nach einer bestimmten Zeitdauer wieder geöffnet wird. Das Öffnen der verschließbaren Verbindung ermöglicht dann das Ab- bzw. Zurückführen des Lösemitteldampfes in die zweite Kammer. Die Expositionsdauer des Kunststoffteils in dem Lösemitteldampf kann dadurch gezielt gesteuert werden.

Es ist von Vorteil, wenn die Vorrichtung weiter eine dritte Kammer aufweist, die mit der ersten Kammer durch eine zweite verschließbare Verbindung verbunden ist. Die dritte Kammer ist zur Aufnahme von zumindest eines Teils des Gases oder Gasgemischs aus der ersten Kammer vorgesehen, wenn das Antriebselement von der Ausgangsposition in die Endposition überführt wird, und wenn die erste Kammer mit Gas oder Gasgemisch befüllt ist. Vorzugsweise weist die dritte Kammer ein drittes Heizmittel zum Temperieren der dritten Kammer auf eine dritte Temperatur auf. Die dritte Kammer kann das zu Beginn in der ersten Kammer aufgenommene Gas oder Gasgemisch aufnehmen, das aufgrund des Einleitens des Lösemitteldampfes von der zweiten in die erste Kammer aus der ersten Kammer verdrängt wurde. Damit kann zum einen das Gas oder Gasgemisch in der Vorrichtung gespeichert werden, und es wird verhindert, dass dieses Gas oder Gasgemisch an die Umgebung abgegeben wird. In anderen Worten, das aus der ersten Kammer verdrängte Gas oder Gasgemisch kann wiederverwendet werden. Des Weiteren wird dadurch, dass die dritte Kammer zumindest einen Teil des in der ersten Kammer vorhandenen Gases oder Gasgemischs beim Einleiten des Lösemitteldampfes in die erste Kammer aufnimmt, verhindert, dass eine erhebliche Vermischung des Lösemitteldampfes mit dem Gas oder Gasgemisch in der ersten Kammer stattfindet. Damit wird gewährleistet, dass der Lösemitteldampf beim Einleiten in die erste Kammer das dort vorhandene Gas oder Gasgemisch zum größten Teil verdrängt, als dass es sich mit diesem vermischt. Begünstigt wird dieser Verdrängungsprozess dadurch, wenn der Lösemitteldampf eine größere Dichte aufweist als das Gas oder Gasgemisch, wie bereits im Zusammenhang mit dem ersten und zweiten Aspekt der Erfindung dargestellt.

Es ist weiter zweckmäßig, dass das Überführen des Antriebsmittels von der Ausgangsposition in die Endposition bewirkt, dass das Volumen der zweiten Kammer verkleinert wird. Die Volumenverkleinerung der zweiten Kammer führt einerseits zu einer mechanischen Verdrängung des Lösemitteldampfes aus der zweiten Kammer; andererseits erhöht sich der Druck in der zweiten Kammer. Dadurch kann das Einleiten des Lösemitteldampfes von der zweiten in die erste Kammer gesteuert und/oder beschleunigt werden.

Vorzugsweise weist die erste Kammer eine erste Homogenisierungsvorrichtung, besonders bevorzugt eine erste Umwälzvorrichtung auf. Vorzugsweise weist die zweite Kammer eine zweite Homogenisierungsvorrichtung, besonders bevorzugt eine zweite Umwälzvorrichtung auf. Die Homogenisierungsvorrichtungen dienen der Umwälzung, des Verrührens, Vermischens etc. des Lösemitteldampfes, Gases und/oder Gasgemischs. Die zweite Homogenisierungsvorrichtung ist zweckmäßig dazu vorgesehen, den Lösemitteldampf in der zweiten Kammer möglichst homogen vorzubereiten. Die erste Homogenisierungsvorrichtung ist zweckmäßig dazu vorgesehen, den in die erste Kammer eingeleiteten Lösemitteldampf homogen zu erhalten. Die Vorteile wurden im Zusammenhang mit dem ersten und zweiten Aspekt der Erfindung angegeben.

Bevorzugt weist die erste Kammer eine geneigte Innenwand auf, die derart ausgelegt ist, dass zumindest ein Teil des Lösemitteldampfes von der ersten Kammer in die zweite Kammer abgeführt wird, wenn sich Lösemitteldampf in der ersten Kammer befindet, die verschließbare Verbindung zwischen der ersten Kammer und der zweiten Kammer geöffnet ist und das Antriebsmittel von der Endposition in die Ausgangsposition überführt wird. Es ist besonders vorteilhaft, wenn die Bodenfläche und/oder die Deckfläche geneigt sind. Die geneigte Innenwand hat mehrere Vorteile. Zum einen trägt diese dazu bei, dass der Lösemitteldampf beim Öffnen der verschließbaren Verbindung zügig in die zweite Kammer abgeführt wird. Darüber hinaus wird Lösemittel, das in der ersten Kammer kondensiert und auf die unterste Wand der ersten Kammer, die bevorzugt der geneigten Innenwand entspricht, tropft, in die zweite Kammer zurückgeführt. In der zweiten Kammer kann das zurückgeführte Lösemittel dann wieder verdampft werden.

Es ist zweckmäßig, wenn das Überführen des Antriebsmittels von der Endposition in die Ausgangsposition bewirkt, dass zumindest ein Teil des Lösemitteldampfes von der ersten Kammer in die zweite Kammer abgeführt wird, wenn sich Lösemitteldampf in der ersten Kammer befindet und die verschließbare Verbindung zwischen der ersten Kammer und der zweiten Kammer geöffnet ist. Bevorzugt bewirkt das Überführen des Antriebsmittels von der Endposition in die Ausgangsposition, dass das Volumen der dritten Kammer verkleinert wird. Durch die Volumenvergrößerung der zweiten Kammer steht dem Lösemitteldampf wieder dasselbe Volumen zur Verfügung wie zu Beginn des Glättungsprozesses. Damit kann der Lösemitteldampf durch Temperieren auf die zweite Temperatur wieder in nahezu denselben Zustand versetzt werden wie vor dem Einleiten in die erste Kammer. Darüber hinaus nimmt der Druck in der zweiten Kammer ab. Der Druckunterschied bewirkt eine Sogwirkung auf den Lösemitteldampf in der ersten Kammer. Damit kann der Lösemitteldampf für weitere Durchläufe wiederverwendet werden. Die Volumenverkleinerung der dritten Kammer bewirkt, wenn die zweite verschließbare Verbindung zwischen erster und dritter Kammer geöffnet ist, dass das in der dritten Kammer vorhandene Gas oder Gasgemisch wieder in die erste Kammer eingeleitet wird. Dieses Gas oder Gasgemisch führt damit zu einer Verdrängung des Lösemitteldampfes in die zweite Kammer, wenn die verschließbare Verbindung zwischen erster und zweiter Kammer geöffnet ist.

Vorzugsweise umfasst die erste Kammer eine Einleitvorrichtung, die dazu ausgelegt ist, mit dem Kunststoffteil verbunden zu werden, und den Lösemitteldampf in das Innere des Kunststoffteils einzuleiten. Die Einleitvorrichtung bewirkt eine zwangsweise Einleitung des Lösemitteldampfes in das Innere des Kunststoffteils. Mit einer derartigen Einleitvorrichtung ist es möglich, Innenflächen des Kunststoffelements, wie z.B. Öffnungen, Kanäle, Bohrungen, zu glätten.

Gemäß einem weiteren Aspekt der Erfindung wird die Verwendung der erfindungsgemäßen Vorrichtung zum chemischen Glätten eines Kunststoffteils beschrieben.

Das Lösemittel umfasst vorteilhafterweise eine starke Säure, bevorzugt Carbonsäure, Schwefelsäure, Salzsäure, Salpetersäure, Königs-Wasser; chlorierte Kohlenwasserstoffe, bevorzugt Dichlormethan, Trichlormethan, Perchlorethen, Tetrachlorethen; Ketone, bevorzugt Aceton; Ether, bevorzugt Tetrahydrofuran; und/oder aromatische Kohlenwasserstoffe, bevorzugt Benzol, Xylol, Toluol, Ethylbenzol.

Zweckmäßigerweise umfasst das Kunststoffteil mindestens eines der Polymere aus der Gruppe bestehend aus Polyetherimiden, Polycarbonaten, Polyphenylensulfonen, Polyphenylenoxiden, Polyethersulfonen, Acrylnitril-Butadien-Styrol-Copolymerisaten, Polyacrylaten, Polyestern, Polyamiden, Polylactiden, Polyethylenterephtalaten, Polymethylmetacrylaten, Polyaryletherketonen, Polyethern, Polyurethanen, Polyimiden, Polyamidimiden, Polyolefinen sowie Copolymeren, welche mindestens zwei verschiedene Monomereinheiten der vorgenannten Polymere enthalten, und/oder mindestens ein Polyblend auf der Basis von mindestens zwei der vorgenannten Polymere und Copolymere.

Im Folgenden werden bevorzugte Ausführungsbeispiele der vorliegenden Erfindung anhand der nachfolgenden Figuren beschrieben. Es zeigen:
Figur 1: eine Vorrichtung zum chemischen Glätten eines Kunststoffteils gemäß einem ersten Ausführungsbeispiel der Erfindung;
Figuren 2a-2k: die einzelnen Schritte des erfindungsgemäßen Verfahren zum chemischen Glätten des Kunststoffteils unter Verwendung der Vorrichtung gemäß dem ersten Ausführungsbeispiel;
Figur 3a: eine Vorrichtung zum chemischen Glätten eines Kunststoffteils gemäß einem zweiten Ausführungsbeispiel der Erfindung, das speziell für die Innenglättung des Kunststoffteils geeignet ist;

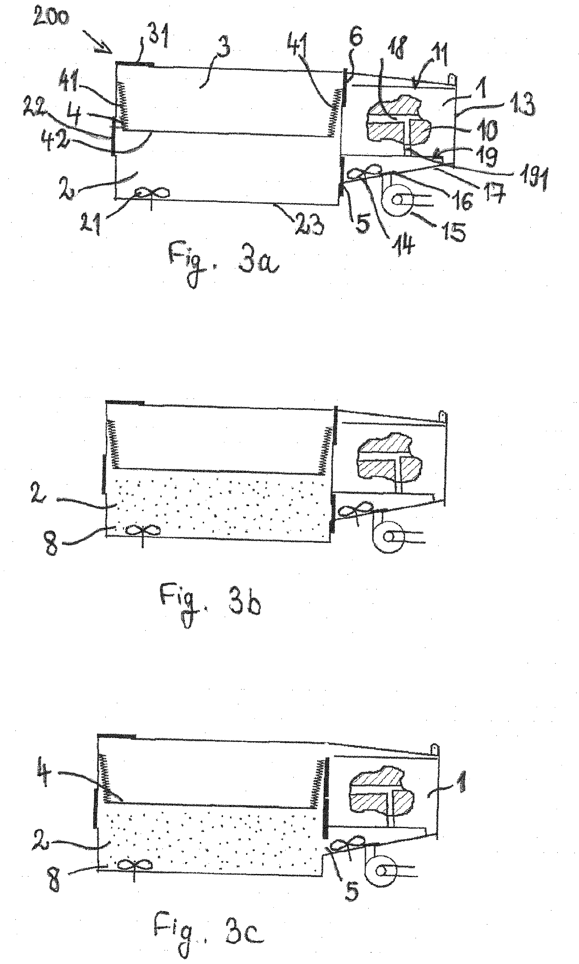

Figuren 3a-3h: die einzelnen Schritte des erfindungsgemäßen Verfahren zum chemischen Glätten der Innenflächen eines Kunststoffteils unter Verwendung der Vorrichtung gemäß zweiten ersten Ausführungsbeispiel

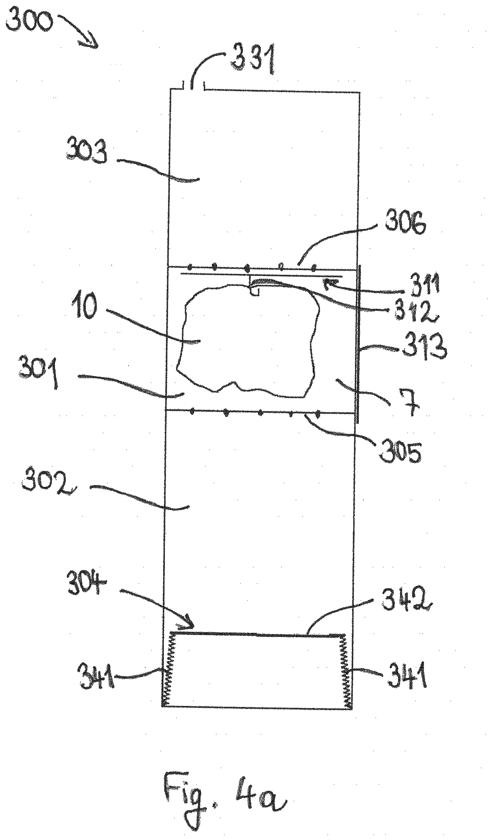

Figur 4a: eine Vorrichtung zum chemischen Glätten eines Kunststoffteils gemäß einem dritten Ausführungsbeispiel der Erfindung;
Figuren 4a-4g: die einzelnen Schritte des erfindungsgemäßen Verfahren zum chemischen Glätten des Kunststoffteils unter Verwendung der Vorrichtung gemäß dem dritten Ausführungsbeispiel.

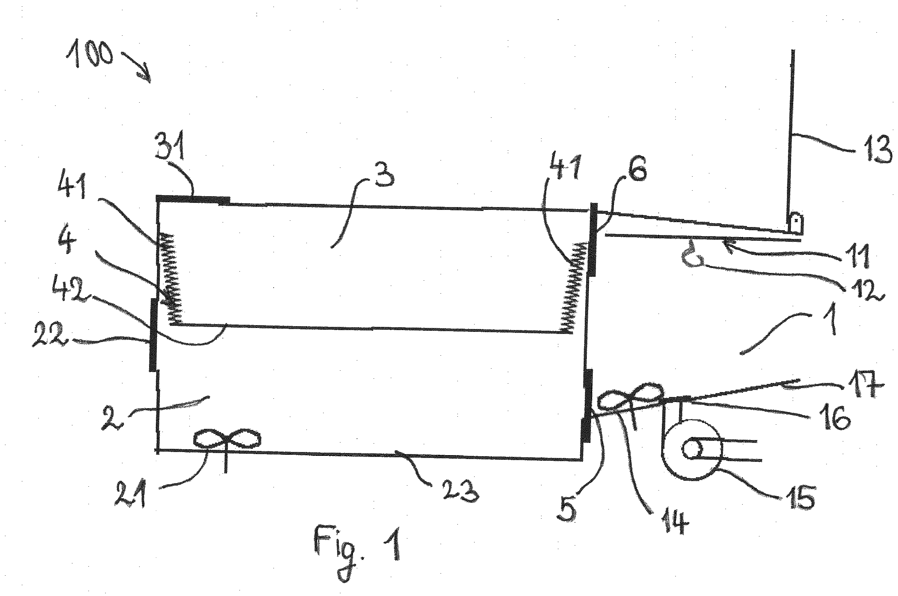

Figur 1 zeigt ein erfindungsgemäßes Ausführungsbeispiel einer Vorrichtung 100 zum chemischen Glätten eines durch selektives schichtweises Verfestigen eines Aufbaumaterials hergestellten Kunststoffteils. Die Vorrichtung umfasst eine erste Kammer 1, eine zweite Kammer 2, eine dritte Kammer 3 und ein Antriebselement 4.

Die erste Kammer 1 dient zur Aufnahme eines zu glättenden Kunststoffteils (nicht gezeigt). Dazu ist in der ersten Kammer 1 ein Positionierungsmittel 11 vorgesehen. In Fig. 1 ist das Positionierungsmittel 11 als Kran dargestellt. Dieser weist speziell zur Halterung des Kunststoffteils einen Haken 12 auf. Die erste Kammer 1 umfasst weiter eine Luke 13. Zum Positionieren des Kunststoffteils wird diese geöffnet. In Fig. 1 ist die Luke 13 in der geöffneten Stellung dargestellt. Die erste Kammer 1 umfasst darüber hinaus eine erste Umwälzvorrichtung 14. In Fig. 1 ist diese als Rührer dargestellt. Die erste Umwälzvorrichtung ist dafür vorgesehen, den Lösemitteldampf, der in die erste Kammer 1 eingeleitet werden kann, kontinuierlich umzuwälzen und damit zu durchmischen, um eine homogene Verteilung des Lösemittels im Lösemitteldampf zu gewährleisten. Außerhalb der ersten Kammer ist eine Absaugvorrichtung 15 angebracht. Diese ist mit einer verschließbaren Verbindung 16 mit dem Inneren der ersten Kammer 1 verbunden. Die verschließbare Verbindung 16 kann beispielsweise durch eine Luke oder ein Ventil geöffnet bzw. geschlossen werden. Die Absaugvorrichtung 15 wird bevorzugt dafür eingesetzt, Lösemitteldampf, der beim Trocknen des Kunststoffteils in der ersten Kammer 1 entsteht, abzusaugen, bevor das Kunststoffteil aus der ersten Kammer 1 entfernt wird. Damit wird verhindert, dass ein Benutzer mit dem Lösemitteldampf in Berührung kommt.

Die erste Kammer 1 umfasst darüber hinaus ein erstes Heizmittel (nicht gezeigt). Das erste Heizmittel dient zum Temperieren der ersten Kammer 1 auf eine erste Temperatur. Bevorzugt ist das erste Heizmittel in einer oder mehreren Wänden der ersten Kammer integriert. Erfolgt das Temperieren der ersten Kammer 1 durch Heizen mehrerer, besonders bevorzugt sämtlicher, Wände der ersten Kammer 1, so hat dies den Vorteil, dass die Kondensation von Lösemitteldampf an den Wänden der ersten Kammer 1 nicht stärker erfolgt als auf dem zu glättenden Kunststoffteil. Damit kann verhindert werden, dass die Konzentration des Lösemittels im Lösemitteldampf zu stark abnimmt aufgrund von Kondensation an den Wänden der ersten Kammer 1.

Schließlich ist die Bodenfläche 17 der ersten Kammer 1 geneigt. Dadurch wird die Zurückführung des Lösemitteldampfes und/oder ggf. von kondensiertem Lösemittel von der ersten Kammer 1 in die zweite Kammer 2 begünstigt.

Die zweite Kammer 2 dient der Aufnahme von Lösemitteldampf. Die in Fig. 1 dargestellte zweite Kammer 2 umfasst eine zweite Umwälzvorrichtung 21. In Fig. 1 ist diese als Rührer dargestellt. Die zweite Umwälzvorrichtung ist dafür vorgesehen, den Lösemitteldampf, mit dem die zweite Kammer 2 gefüllt werden kann, kontinuierlich umzuwälzen und damit zu durchmischen, um eine homogene Verteilung des Lösemittels im Lösemitteldampf zu gewährleisten. Darüber hinaus weist die zweite Kammer 2 einen Auslass 22 auf. Dieser Auslass 22 dient dazu, die zweite Kammer 2 zu entleeren. Bevorzugt wird durch den Auslass 22 Lösemitteldampf abgeführt, nachdem die Glättung eines oder mehrerer Kunststoffteile abgeschlossen ist. Der Auslass 22 kann aber auch gleichzeitig als Einlass für bereits vorbereiteten Lösemitteldampf dienen, mit dem die zweite Kammer 2 gefüllt wird.

Die zweite Kammer 2 umfasst darüber hinaus ein zweites Heizmittel (nicht gezeigt). Das zweite Heizmittel dient zum Temperieren der zweiten Kammer 2 auf eine zweite Temperatur. Bevorzugt ist das zweite Heizmittel in einer oder mehreren Wänden der zweiten Kammer integriert. Bevorzugt umfasst die zweite Kammer 2 ein in der Bodenfläche 23 integriertes zweites Heizmittel. Dieses kann zweckmäßigerweise dazu verwendet werden, zunächst flüssiges in die zweite Kammer 2 eingeführtes Lösemittel zu verdampfen, indem das zweite Heizmittel die Bodenfläche 23 auf die Siedetemperatur / Verdampfungstemperatur des Lösemittels erhitzt. In diesem Fall wird die zweite Kammer 2 dadurch mit Lösemitteldampf gefüllt, dass flüssiges Lösemittel in der zweiten Kammer 2 verdampft wird. Ist Lösemitteldampf mit einer bestimmten Konzentration an Lösemittel erzeugt, bevorzugterweise dadurch, dass das gesamte Lösemittel verdampft ist, ist es zweckmäßig, das zweite Heizmittel derart zu kontrollieren, dass die Temperatur des Lösemitteldampfes in der zweiten Kammer 2 eine vorgegebene zweite Temperatur aufweist. Es ist jedoch auch möglich, dass Lösemitteldampf durch den Auslass 22 in die zweite Kammer 2 eingeleitet wird. Das zweite Heizmittel temperiert den Lösemitteldampf dann auf eine bestimmte zweite Temperatur.

Die erste Kammer 1 ist mit der zweiten Kammer 2 durch eine verschließbare Verbindung 5 verbunden. Wenn diese geöffnet ist, dient sie dazu, dass Lösemitteldampf von der zweiten Kammer 2 in die erste Kammer 1 eingeleitet werden kann, oder dass Lösemitteldampf von der ersten Kammer 1 in die zweite Kammer 2 zurückgeführt werden kann. Die verschließbare Verbindung 5 kann beispielsweise durch eine Luke oder ein Ventil umgesetzt werden.

Die dritte Kammer 3 dient der Aufnahme des Gases oder Gasgemischs, das sich in der ersten Kammer 1 befindet. Dazu ist eine zweite verschließbare Verbindung 6 zwischen der ersten Kammer 1 und der dritten Kammer 3 vorgesehen. Die zweite verschließbare Verbindung 6 kann beispielsweise durch eine Luke oder ein Ventil umgesetzt werden. Die dritte Kammer 3 umfasst vorzugsweise ein drittes Heizmittel (nicht gezeigt). Dieses ist zweckmäßig in einer oder in mehreren Wänden der dritten Kammer 3 integriert. In Fig. 1 ist des Weiteren ein Auslass 31 gezeigt. Dieser kann durch eine Luke oder einen verschließbaren Hahn umgesetzt werden. Über den Auslass 31 kann das Gas oder Gasgemisch, oder auch Lösemitteldampf, die sich in der dritten Kammer 3 befinden, abgesaugt werden.

Die erste Kammer 1, zweite Kammer 2 und dritte Kammer 3 sind bevorzugt thermisch isolierbar. Besonders bevorzugt sind diese Kammern 1, 2, 3 sowohl gegenüber der Umgebung und/oder untereinander thermisch isolierbar. Thermische Isolierung ist dabei gegeben, wenn sämtliche Verbindungen 5, 6, 16 sowie Öffnungen bzw. Luken 13, 22, 31 geschlossen sind.

Die Vorrichtung 100 umfasst weiter ein Antriebselement 4. Das Antriebselement 4 ist dazu vorgesehen, dass bei dessen Aktivierung oder Betätigung Lösemitteldampf von der zweiten Kammer 2 in die erste Kammer überführt wird, sofern die verschließbare Verbindung 5 geöffnet ist. In Fig. 1 umfasst das Antriebselement 4 einen Stempel 42. Dieser Stempel 42 trennt die zweite Kammer 2 von der dritten Kammer. Um eine thermische Isolation von zweiter Kammer 2 und dritter Kammer 3 zu gewährleisten, ist es vorteilhaft, dass das Antriebselement 4 thermisch isoliert ist oder aus thermisch isolierendem Material hergestellt ist bzw. dieses umfasst. Das Antriebselement 4 kann von einer Ausgangsposition in eine Endposition überführt werden. Gezeigt ist das Antriebselement 4 in der Ausgangsposition. Um zu gewährleisten, dass die zweite Kammer 2 und dritte Kammer 3 bei der Überführung des Antriebselements 4 thermisch voneinander isoliert bleiben, umfasst das Antriebselement 4 zweckmäßigerweise ein elastisches Isolierelement 41. In Fig. 1 ist dieses in Form eines Faltenbalgs 41 dargestellt. Der Faltenbalg 41 ist einerseits an den Wänden der zweiten Kammer 2 und andererseits am Stempel 42 des Antriebselements 4 befestigt. Der Faltenbalg 41 besteht zweckmäßigerweise aus einem thermisch isolierenden Material. Die zweite Kammer 2 und die dritte Kammer 3 sind damit thermisch isoliert, sowohl in der Ausgangsposition als auch in der Endposition als auch während des Überführens des Antriebselements 4.

Zur Überführung des Antriebselements 4 von der Ausgangsposition in die Endposition wird bevorzugt ein hydraulisches Element, besonders bevorzugt ein Hydraulikzylinder, (nicht gezeigt) eingesetzt. Darüber hinaus können elastische Elemente, wie beispielsweise Spiralfedern, zum Einsatz kommen; besonders bevorzugt sind diese in das elastische Isolierelement 41 integriert.

Das Volumen der zweiten Kammer 2, unter der Voraussetzung, dass sich das Antriebselement 4 in der Ausgangsposition befindet, ist zweckmäßigerweise zwischen 10 % und 100 % größer als das Volumen der ersten Kammer 1. Das größere Volumen der zweiten Kammer 2 stellt sicher, dass genügend Lösemitteldampf vorhanden ist, um den größten Teil des Gases oder Gasgemischs aus der ersten Kammer 1 zu verdrängen.

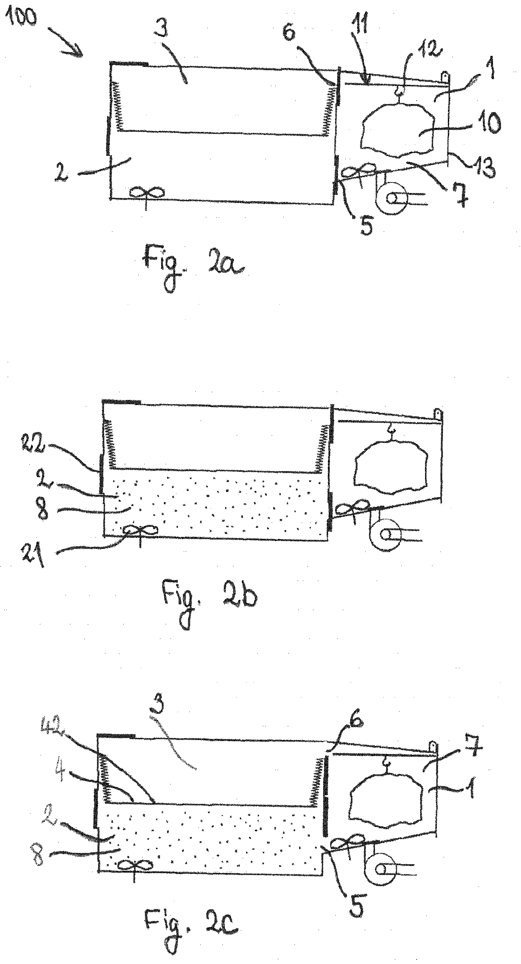

In den Figuren 2a-2k wird ein erfindungsgemäßes Verfahren zur chemischen Glättung eines durch selektives schichtweises Verfestigen eines Aufbaumaterials hergestellten Kunststoffteils 10 unter Verwendung der Vorrichtung 100 gemäß dem ersten Ausführungsbeispiel beschrieben.

Figur 2a zeigt den ersten Schritt des Verfahrens. Ein zu glättendes Kunststoffteil 10 ist in der ersten Kammer 1 der Vorrichtung 100 positioniert. Es ist gezeigt, dass das Kunststoffteil 10 an dem Haken 12 des Positionierungsmittels 11 hängt. Die Luke 13 der ersten Kammer 1 ist geschlossen. Darüber hinaus sind die verschließbare Verbindung 5 zwischen erster Kammer 1 und zweiter Kammer 2 sowie die zweite verschließbare Verbindung 6 zwischen erster Kammer 1 und dritter Kammer 3 geschlossen. Die erste Kammer 1 ist mit einem Gas oder Gasgemisch 7 gefüllt. Besonders bevorzugt ist die erste Kammer 1 zu Beginn des erfindungsgemäßen Glättungsverfahrens mit Luft 7 gefüllt. Die zweite Kammer 2 und die dritte Kammer 3 sind dann auch mit Luft gefüllt. Die erste Kammer 1 wird auf eine erste Temperatur temperiert. Durch das Temperieren der ersten Kammer 1 nimmt insbesondere auch das Kunststoffteil 10 zumindest annährend die erste Temperatur an. Damit ist es möglich, die Temperatur des Kunststoffteils 10, insbesondere die Temperatur auf der Oberfläche des Kunststoffteils 10, auf einen vorgegebenen Wert einzustellen. Das Temperieren des Kunststoffteils 10 auf die bestimmte erste Temperatur erlaubt es, den Niederschlag an Lösemittel auf dem Kunststoffteil 10, der im Laufe des erfindungsgemäßen Verfahrens erfolgt, zu kontrollieren und/oder zu regulieren.

In Fig. 2b befindet sich Lösemitteldampf 8 in der zweiten Kammer 2. Es ist möglich, dass der bereits vorbereitete Lösemitteldampf 8 durch den Auslass 22 in die zweite Kammer 2 gefüllt wird. Es ist erfindungsgemäß aber auch möglich, dass die zweite Kammer 2 mit Lösemitteldampf 8 gefüllt wird, indem flüssiges Lösemittel in die zweite Kammer 2 eingebracht wird und dort dann verdampft wird. Die zweite Kammer 2 wird auf eine zweite Temperatur temperiert. Der Lösemitteldampf 8 wird damit zumindest annährend auf die zweite Temperatur temperiert. Besonders bevorzugt ist der Lösemitteldampf 8 mit Lösemittel gesättigt. Es ist vorteilhaft, die zweite Temperatur derart zu wählen, dass sie annährend der Siedetemperatur / Verdampfungstemperatur des Lösemittels in der zweiten Kammer 2 entspricht. Damit kann annähernd die größtmögliche Konzentration an Lösemittel im Lösemitteldampf erreicht werden. In anderen Worten, der Partialdruck des Lösemittels im Lösemitteldampf beträgt annähernd 100 %. Es ist aber erfindungsgemäß auch möglich, die zweite Kammer 2 auf eine geringere als die genannte Temperatur zu temperieren. In diesem Fall ist der Lösemitteldampf mit Lösemittel bereits bei einer geringeren Konzentration (oder gleichbedeutend: bei einem geringeren Partialdruck des Lösemittels im Lösemittel dampf) gesättigt. Schließlich ist es erfindungsgemäß auch möglich, dass der Lösemitteldampf mit Lösemittel nicht volltändig gesättigt ist.

Durch die Wahl einer bestimmten zweiten Temperatur kann damit die Konzentration des Lösemittels im Lösemitteldampf 8 kontrolliert und/oder eingestellt werden.

Ist der Lösemitteldampf 8 gesättigt, so ist es erfindungsgemäß ausreichend, dass die erste Temperatur geringer ist als die zweite Temperatur. Ist der Lösemitteldampf 8 nicht gesättigt, so ist die erste Temperatur kleiner zu wählen als die Taupunkttemperatur des Lösemittels bei der gegebenen Konzentration des Lösemittels im Lösemitteldampf 8. Für den Fall, dass die zweite Temperatur in etwa der Siedetemperatur des Lösemittels in der zweiten Kammer 2 entspricht, ist es zweckmäßig, die erste Temperatur in der ersten Kammer auf 80 % bis 90 % der besagten Siedetemperatur einzustellen.

Durch Umwälzen des Lösemitteldampfes 8 mithilfe der zweiten Umwälzvorrichtung 21 wird eine homogene Verteilung des Lösemittels im Lösemitteldampf 8 gewährleistet.

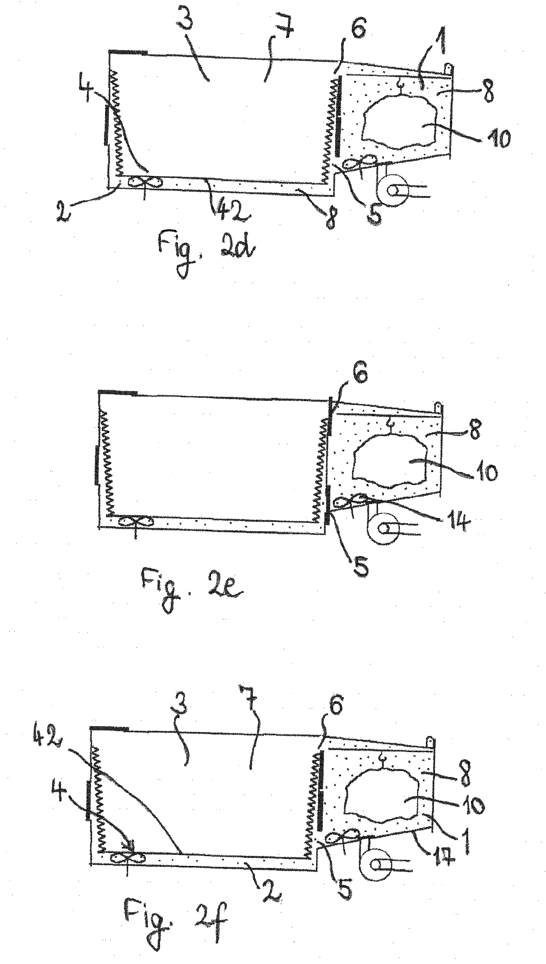

In Figuren 2c und 2d ist das Einleiten des Lösemitteldampfes 8 von der zweiten Kammer 2 in die erste Kammer 1 gezeigt. Zunächst werden dazu sowohl die verschließbare Verbindung 5 zwischen erster Kammer 1 und zweiter Kammer 2, als auch die zweite verschließbare Verbindung 6 zwischen erster Kammer 1 und dritter Kammer 3 geöffnet. In Fig. 2c befindet sich das Antriebselement 4 in der Ausgangsposition. Zum Einleiten des Lösemitteldampfes 8 von der zweiten Kammer 2 in die erste Kammer 1 wird das Antriebselement 4 in die Endposition überführt; die Endposition ist in Fig. 2d gezeigt. Das Überführen des Antriebselements 4 bewirkt, dass das Volumen der zweiten Kammer 2 verringert wird. Gleichzeitig vergrößert sich das Volumen der dritten Kammer 3. Der Stempel 42 des Antriebselements 4 treibt den Lösemitteldampf 8 von der zweiten Kammer 2 in die erste Kammer 1. Durch die Volumenabnahme der zweiten Kammer 2 vergrößert sich dort der Druck. Der Druckgradient zwischen der zweiten Kammer 2 und ersten Kammer 1 wirkt zusätzlich als treibende Kraft für die Einleitung des Lösemitteldampfes 8 in die erste Kammer 1. Der einströmende Lösemitteldampf 8 verdrängt das Gas oder Gasgemisch 7 aus der ersten Kammer 1. Gas oder Gasgemisch 7 wird von der ersten Kammer 1 in die dritte Kammer 3 getrieben. Dieser letztgenannte Vorgang wird dadurch beschleunigt, dass das Volumen der dritten Kammer 3 vergrößert wird und damit ein Unterdruck in der dritten Kammer 3 vorherrscht. Besonders vorteilhaft ist es, wenn die Dichte des Lösemitteldampfes 8 größer ist als die Dichte des Gases oder Gasgemischs 7 in der ersten Kammer 1. Denn dadurch erfährt das Gas oder Gasgemisch 7 eine Auftriebskraft, die die Verdrängung des Gases oder Gasgemischs 7 aus der ersten Kammer 1 in die dritte Kammer 3 begünstigt.

In Fig. 2d ist die erste Kammer 1 nahezu vollständig mit Lösemitteldampf 8 gefüllt bzw. geflutet. Das Kunststoffteil 10 ist nun vollständig von Lösemitteldampf 8 umgeben.

In Fig. 2e ist gezeigt, dass die verschließbare Verbindung 5 zwischen erster Kammer 1 und zweiter Kammer 2 sowie die zweite verschließbare Verbindung 6 zwischen erster Kammer 1 und dritter Kammer 3 geschlossen sind. Das Kunststoffteil 10 ist nahezu vollständig von Lösemitteldampf 8 umgeben. Es ist zweckmäßig, den Lösemitteldampf 8 in der ersten Kammer 1 umzuwälzen, um eine homogene Verteilung des Lösemittels zu erreichen. Dazu ist eine erste Umwälzvorrichtung 14 vorgesehen. Der Lösemitteldampf 8 wird für eine bestimmte Zeitdauer auf das Kunststoffteil einwirken gelassen. Dadurch, dass die Temperatur des Kunststoffteils 10 bzw. dessen Oberfläche annähernd der ersten Temperatur entspricht, kondensiert das Lösemittel in dem Lösemitteldampf 8 auf der Oberfläche des Kunststoffteils 10. Das Lösemittel wurde derart gewählt, dass es mit dem Material des Kunststoffteils 10 reagiert. Diese Reaktion bewirkt, dass eine äußere Schicht des Kunststoffteils 10 verflüssigt wird. Durch diese Verflüssigung werden Stufen, Kanten, Einkerbungen etc. auf der Oberfläche des Kunststoffteils 10 geglättet. Die Menge des Lösemittel-Niederschlags auf der Oberfläche des Kunststoffteils 10 wird durch die Temperaturdifferenz zwischen erster und zweiter Temperatur beeinflusst. Genauso hat die Konzentration von Lösemittel in dem Lösemitteldampf 8 Einfluss auf besagten Lösemittel-Niederschlag. Die folgenden Parameter bestimmen die chemische Glättung der Oberfläche des Kunststoffteils 10: die Temperaturdifferenz zwischen erster Kammer 1 und zweiter Kammer 2, der Konzentration des Lösemittels im Lösemitteldampf 8 und die bestimmte Zeitdauer, während der der Lösemitteldampf 8 auf das Kunststoffteil 10 einwirken gelassen wird.

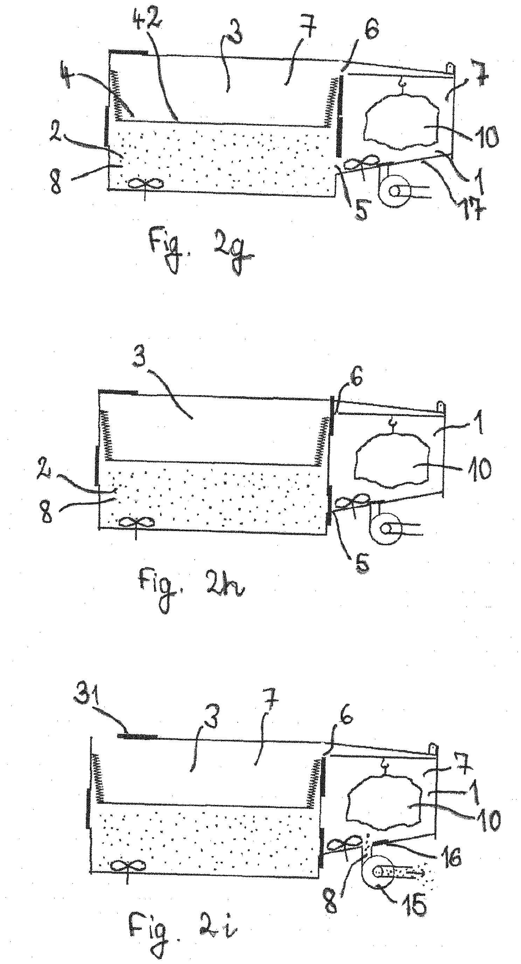

In Figuren 2f und 2g ist das Abführen bzw. Zurückführen des Lösemitteldampfes 8 von der ersten Kammer 1 in die zweite Kammer 2 gezeigt. Nachdem der Lösemitteldampf 8 für die bestimmte Zeitdauer auf das Kunststoffteil eingewirkt hat, werden die verschließbare Verbindung 5 zwischen erster Kammer 1 und zweiter Kammer 2 sowie die zweite verschließbare Verbindung 6 zwischen erster Kammer 1 und dritter Kammer 3 geöffnet. Das Antriebselement 4 wird von der Endposition, wie in Fig. 2f gezeigt, in die Ausgangsposition, in Fig. 2g gezeigt, überführt. Dadurch wird das Volumen der zweiten Kammer 2 wieder vergrößert. Damit verbunden ist eine Erniedrigung des Drucks in der zweiten Kammer 2, was eine Sogwirkung verursacht. Dadurch wird ein großer Teil des Lösemitteldampfes 8 wieder in die zweite Kammer 2 zurückgeführt. Darüber hinaus wird beim Überführen des Antriebselements 4 in die Ausgangsposition gleichzeitig das Volumen der dritten Kammer 3 verkleinert. Der Stempel 42 des Antriebselements 4 treibt das Gas oder Gasgemisch 7 von der dritten Kammer 3 wieder zurück in die erste Kammer 1. Begünstigt wird dieser Vorgang dadurch, dass in der dritten Kammer 3 aufgrund der Volumenverkleinerung ein Überdruck entsteht. Die geringere Dichte des Gases oder Gasgemischs 7 im Vergleich zum Lösemitteldampf 8 trägt auch dazu bei, den Lösemitteldampf 8 zurück in die zweiten Kammer 2 zu drängen. Schließlich begünstigt die geneigte Innenwand / Bodenfläche 17 der ersten Kammer 1 das Abführen des Lösemitteldampfes 7. Durch die geneigte Innenwand / Bodenfläche 17 ist es auch möglich, in der ersten Kammer 1 kondensiertes Lösemittel, das auf die Bodenfläche 17 getropft ist, wieder in die zweite Kammer 2 zurückzuführen. Dort kann dieses wieder verdampft werden.

In Fig. 2h ist der Trocknungsprozess gezeigt. Die verschließbare Verbindung 5 zwischen erster Kammer 1 und zweiter Kammer 2 ist wieder geschlossen, um zu verhindern, dass Lösemitteldampf 8 aus der zweiten Kammer 2 in die erste Kammer 1 eindringt. Die zweite verschließbare Verbindung 6 zwischen erster Kammer 1 und dritter Kammer 3 ist ebenfalls geschlossen, um zu verhindern, dass Lösemitteldampf, der während des Trocknungsprozesses entsteht, in die dritte Kammer 3 eindringt. Zum Trocknen verbleibt das geglättete Kunststoffteil in der ersten Kammer 1. Es ist vorteilhaft, die erste Kammer 1 auf eine Temperatur zu temperieren, bevorzugt mithilfe des ersten Heizmittels, die sich von der ersten Temperatur unterscheidet. Damit kann der Trocknungsprozess kontrolliert gesteuert werden.

In Fig. 2i ist das Ende des Trocknungsprozesses dargestellt, und zwar bevor das geglättete Kunststoffteil 10 aus der ersten Kammer 1 entfernt wird. Um den beim Trocknungsprozess entstandenen Lösemitteldampf 8 aus der ersten Kammer 1 zu entfernen, wird dieser abgesaugt. Dazu wird eine Absaugvorrichtung 15 verwendet. Diese befindet sich außerhalb der ersten Kammer 1. Die Absaugvorrichtung 15 ist über eine verschließbare Verbindung 16 mit dem Inneren der ersten Kammer 1 verbunden. Zum Absaugen wird die verschließbare Verbindung 16 geöffnet. Darüber hinaus werden die zweite verschließbare Verbindung 6 zwischen erster Kammer 1 und dritter Kammer 3 sowie der Auslass 31 der dritten Kammer 3 geöffnet. Damit wird sichergestellt, dass während des Absaugvorgangs Gas oder Gasgemisch 7 von außen nachgeführt werden kann, bevorzugt Luft 7 von der Umgebung, und über die dritte Kammer 3 in die erste Kammer 1 eindringen kann.

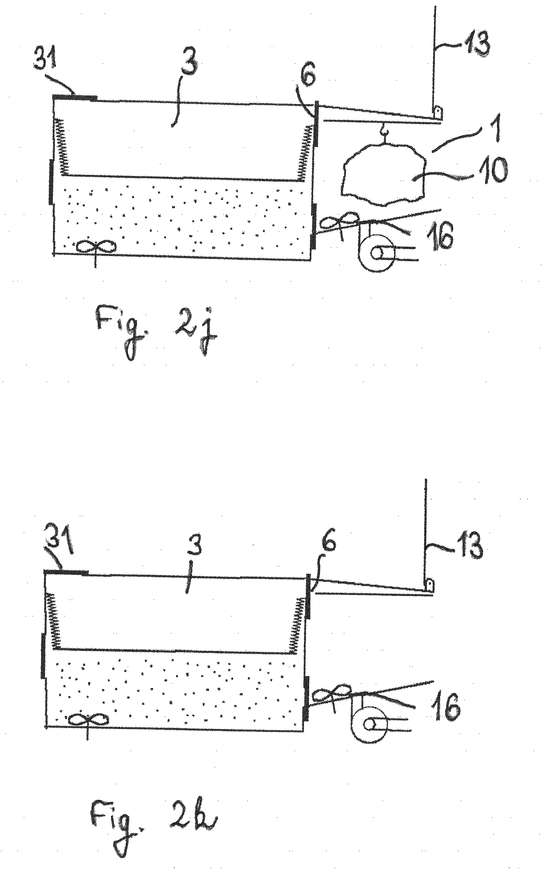

Figuren 2j und 2k zeigen den Abschluss des erfindungsgemäßen Verfahrens. Nach dem Absaugen befindet sich in der ersten Kammer 1 fast ausschließlich nur noch Gas oder Gasgemisch 7, bevorzugt Luft 7. Der Auslass 31, die zweite verschließbare Verbindung 6 zwischen erster Kammer 1 und dritter Kammer 3 sowie die verschließbare Verbindung 16 werden geschlossen. Die Luke 13 der ersten Kammer 1 kann nun geöffnet werden und das geglättete Kunststoffteil 10 kann aus der ersten Kammer 1 entnommen werden.

Für den Benutzer besteht während des gesamten Glättungsprozesses keine Gefahr, mit dem Lösemittel oder Lösemitteldampf in Berührung zu kommen. Darüber hinaus kann der Lösemitteldampf aufgrund der Zurückführung von der ersten Kammer in die zweite Kammer für weitere Prozessdurchläufe wiederverwendet werden.

Wird ein zu glättendes Kunststoffteil in mehreren Durchläufen geglättet, so können bei jedem Durchlaufen die erste und/oder zweite Temperatur und/oder die bestimmte Zeitdauer für das Einwirkenlassen des Lösemitteldampfes auf das Kunststoffteil im Vergleich zum vorangegangen Durchlauf oder zu vorangegangen Durchläufen unterschiedlich gewählt werden. Durch das mehrmalige Durchlaufen der genannten Verfahrensschritte kann kontrolliert verhindert werden, dass eine Übersättigung der Oberfläche des Kunststoffteils mit Lösemittel-Kondensat eintritt, was zu Läufer- und Tropfenbildung führen würde. Durch das Trocknen des Kunststoffteils zwischen zwei Durchläufen kann ein optimales Abtrocknen der Oberfläche erzielt werden. Dies trägt dazu bei, dass keine Flecken auf der Oberfläche des Kunststoffteils entstehen.

Figur 3a zeigt eine Vorrichtung 200 zum chemischen Glätten eines durch selektives schichtweises Verfestigen eines Aufbaumaterials hergestellten Kunststoffteils gemäß einem zweiten Ausführungsbeispiel der Erfindung. Das gezeigte Kunststoffteil 10 ist kein Teil der erfindungsgemäßen Vorrichtung 200, sondern dient lediglich dem leichteren Verständnis. Die Vorrichtung 200 unterscheidet sich von der Vorrichtung gemäß dem ersten Ausführungsbeispiel nur dadurch, dass in der ersten Kammer 1 zusätzlich eine Einleitvorrichtung 19 verwendet wird, die die Glättung von Innenflächen 18 des Kunststoffteils 10 ermöglicht. Soweit sich die Vorrichtung 200 nicht von der Vorrichtung des ersten Ausführungsbeispiels unterscheidet, wird auf die Beschreibung des ersten Ausführungsbeispiels verwiesen und an dieser Stelle nicht mehr wiederholt. Gleiche Bezugszeichen geben entsprechende Elemente an; auf eine explizite Beschreibung dieser gleichen Elemente wird verzichtet und es wird auf die Beschreibung von Fig. 1 verwiesen.

Die in Fig. 3a gezeigte Einleitvorrichtung 19 ist dazu vorgesehen, den von der zweiten Kammer 2 in die erste Kammer 1 eingeleiteten Lösemitteldampf gezielt auf eine bestimmte Stelle des Kunststoffteils 10 zu leiten bzw. zu bündeln. Die gezeigte Einleitvorrichtung 19 ist derart ausgestaltet, dass sie die erste Kammer 1 in zwei Bereiche 101, 102 abgrenzt. Der Lösemitteldampf kann zunächst in den Bereich 102 gelangen und kann dann durch eine Öffnung bzw. über ein Verbindungselement 191 der Einleitvorrichtung 19 in den Bereich 101 eindringen. Die Öffnung bzw. das Verbindungselement 191 ist zweckmäßig derart ausgestaltet, dass dieses mit dem Kunststoffteil 10 dicht verbunden wird. Die Verbindung mit dem Kunststoffteil 10 erfolgt bevorzugt derart, dass der Lösemitteldampf gezwungen wird, durch das Innere 18 des Kunststoffteils 10 zu strömen. Damit werden die Innenflächen 18 des Kunststoffteils 10 geglättet. In Fig. 3a ist die Einleitvorrichtung 19 als Platte ausgestaltet, die rundum an den Seitenwänden der ersten Kammer 1 abgedichtet ist. Als Öffnung weist die Platte in der Mitte einen Flansch auf. Zweckmäßig kann dazu ein Rohr angeflanscht werden. Das Rohr kann dann dicht mit dem Kunststoffteil 10 verbunden werden.

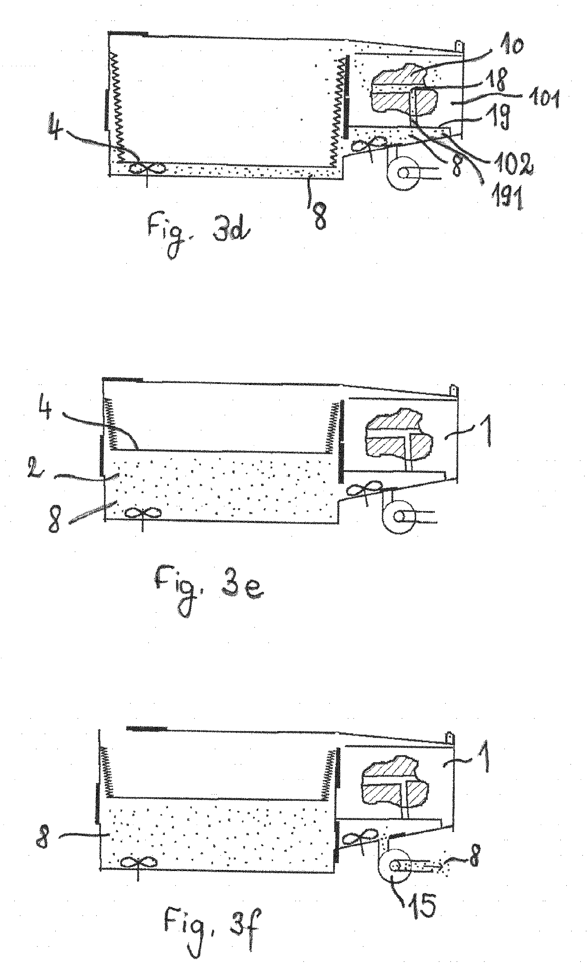

Die in Figuren 3a-3h gezeigten Schritte des erfindungsgemäßen Verfahrens zur chemischen Glättung von Innenflächen eines Kunststoffteils 10 entsprechen im Wesentlichen den in Figuren 2a-2k dargestellten Schritten. Nachfolgend wird daher nur auf die Besonderheiten des Verfahrens zur Glättung der Innenflächen des Kunststoffteils eingegangen (die speziell in Fig. 3d gezeigt sind). Im Übrigen wird auf die entsprechende Beschreibung des in Figuren 2a-2k gezeigten Verfahrens verwiesen.

Figur 3a zeigt auch einen Schritt des erfindungsgemäßen Verfahrens zur Glättung von Innenflächen 18 eines Kunststoffteils 10. In Fig. 3a ist das Kunststoffteil 10 mit Innenflächen 18 in der ersten Kammer 1 positioniert. Das Kunststoffteil 10 ist mit der Einleitvorrichtung 19 verbunden. Die erste Kammer 1 und damit das Kunststoffteil 10 ist auf eine erste Temperatur temperiert. Dafür gelten die Ausführungen zu Fig. 2a entsprechend.

Für das in Fig. 3b dargestellte Füllen der zweiten Kammer 2 mit Lösemitteldampf 8 gelten die Ausführungen im Zusammenhang mit Fig. 2b. Für den in Fig. 3c dargestellten Beginn des Einleitens des Lösemitteldampfes 8 von der zweiten Kammer 2 in die erste Kammer 1 durch Überführen des Antriebselements 4 von der Ausgangsposition in die Endposition bei geöffneter verschließbarer Verbindung 5 zwischen der ersten Kammer 1 und er zweiten Kammer 2 gelten die Ausführungen zu Fig. 2c entsprechend.

In Fig. 3d ist das Antriebselement 4 in der Endposition dargestellt. Der größte Teil des Lösemitteldampfes 8 wurde von der zweiten Kammer 2 in die erste Kammer 1 getrieben. Die in der ersten Kammer 1 positionierte Einleitvorrichtung 19 teilt die erste Kammer 1 in einen ersten Bereich 101 und einen zweiten Bereich 102. In dem ersten Bereich 101 befindet sich das zu glättende Kunststoffteil 10. In den zweiten Bereich 102 wird der Lösemitteldampf 8 von der zweiten Kammer 2 eingeleitet. Durch die spezielle Ausgestaltung der Einleitvorrichtung 19 wird der Lösemitteldampf 8 durch das Verbindungselement 191 geleitet, das dicht mit dem Kunststoffteil 10, zweckmäßigerweise mit dessen Inneren 18, verbunden ist. Dadurch strömt der Lösemitteldampf 8 durch das Innere 18 des Kunststoffteils 10. Damit wird die Glättung der Innenflächen 18 des Kunststoffteils 10 ermöglicht. Das Kunststoffteil 10 bzw. dessen Inneres 18 wird für eine bestimmte Zeitdauer dem Lösemitteldampf 8 ausgesetzt.

Wie im Falle des ersten Ausführungsbeispiels beschrieben, bestimmen die Temperaturdifferenz zwischen erster Kammer 1 und zweiter Kammer 2, die Konzentration des Lösemittels im Lösemitteldampf 8 und die bestimmte Zeitdauer, während der der Lösemitteldampf 8 auf das Kunststoffteil 10 einwirken gelassen wird, die chemische Glättung der Innenflächen 18 des Kunststoffteils 10. Die Wahl der besagten Parameter erlaubt eine kontrollierte chemische Glättung der Innenflächen 18.

Nach dem Einwirkenlassen des Lösemitteldampfes 8 auf die Innenflächen des Kunststoffteils wird der Lösemitteldampf 8 wieder aus der ersten Kammer 1 in die zweite Kammer 2 abgeführt, wie in Fig. 3e gezeigt. Dafür wird das Antriebselement 4 wieder von der Endposition in die Ausgangsposition überführt. Dies erfolgt wie im Zusammenhang mit Figuren 2f und 2g beschrieben.

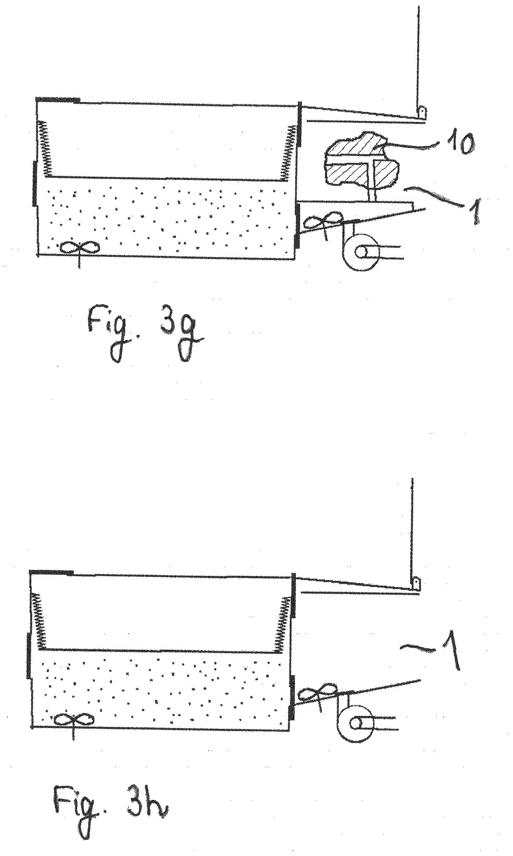

Trocknen und Absaugen 15 des Lösemitteldampfes 8 aus der ersten Kammer 1, wie in Fig. 3f gezeigt, erfolgt wie im Zusammenhang mit Figuren 2h und 2i beschrieben. Das Entfernen des geglätteten Kunststoffteils 10 aus der Vorrichtung, wie in Figuren 3g und 3h gezeigt, erfolgt wie im Zusammenhang mit Figuren 2j und 2k beschrieben.

Figur 4a zeigt ein drittes erfindungsgemäßes Ausführungsbeispiel einer Vorrichtung 300 zum chemischen Glätten eines durch selektives schichtweises Verfestigen eines Aufbaumaterials hergestellten Kunststoffteils 10. Das gezeigte Kunststoffteil 10 ist kein Teil der erfindungsgemäßen Vorrichtung 300, sondern dient lediglich dem leichteren Verständnis. Die Vorrichtung 300 unterscheidet sich von der Vorrichtung gemäß dem ersten Ausführungsbeispiel im Wesentlichen durch die unterschiedliche Anordnung der ersten Kammer 301, zweiten Kammer 302 und dritten Kammer 303. Bei der in Fig. 4a gezeigten Vorrichtung 300 ist die erste Kammer 301 zwischen der zweiten Kammer 302 und dritten Kammer 303 angeordnet. Die drei Kammern 301, 302 und 303 sind aufeinandergestapelt.

Ein Antriebselement 304 befindet sich in der zweiten Kammer 302. Die Ausgestaltung und Funktionalität des Antriebselements 304 entspricht der des Antriebselements des ersten Ausführungsbeispiels (dort mit Bezugszeichen 4 bezeichnet), wie weiter unten noch beschrieben wird.

Die erste Kammer 301 dient zur Aufnahme des zu glättenden Kunststoffteils 10. Dazu ist in der ersten Kammer 301 wie im Falle des ersten Ausführungsbeispiels ein Positionierungsmittel 311, das beispielsweise als Kran mit Haken 312 ausgestaltet sein kann, angeordnet. Die erste Kammer 301 umfasst weiter eine Luke 313, die zum Positionieren und Entfernen des Kunststoffteils 10 geöffnet werden kann. Genauso wie beim ersten Ausführungsbeispiel umfasst die erste Kammer 301 ein erstes Heizmittel (nicht gezeigt) zum Temperieren der ersten Kammer 301 auf eine erste Temperatur. Hinsichtlich bevorzugter Ausgestaltungen der ersten Kammer 301, insbesondere des ersten Heizmittels, wird auf das erste Ausführungsbeispiel verwiesen. Die erste Kammer 301 ist mit einem Gas oder Gasgemisch 7 befüllbar, vorzugsweise befindet sich Luft 7 in der ersten Kammer 301.

Die zweite Kammer 302 dient der Aufnahme von Lösemitteldampf. Die zweite Kammer 302 umfasst ein zweites Heizmittel (nicht gezeigt) zum Temperieren der zweiten Kammer 302 auf eine zweite Temperatur. Die zweite Kammer 302 umfasst weiter ein Antriebselement 304, das - wie im Falle des ersten Ausführungsbeispiels - dazu vorgesehen ist, dass bei dessen Aktivierung oder Betätigung Lösemitteldampf von der zweiten Kammer 302 in die erste Kammer 301 überführt wird. Das dargestellte Antriebselement 304 umfasst einen Stempel 342 und ein elastisches Isolierelement 341, wobei Letzteres beispielsweise in Form eines Faltenbalgs ausgestaltet ist. Das Antriebselement 304 kann von einer Ausgangsposition in eine Endposition überführt werden. Hinsichtlich der weiteren Ausgestaltung des Antriebselements 304 wird auf die Beschreibung des ersten Ausführungsbeispiels Bezug genommen.

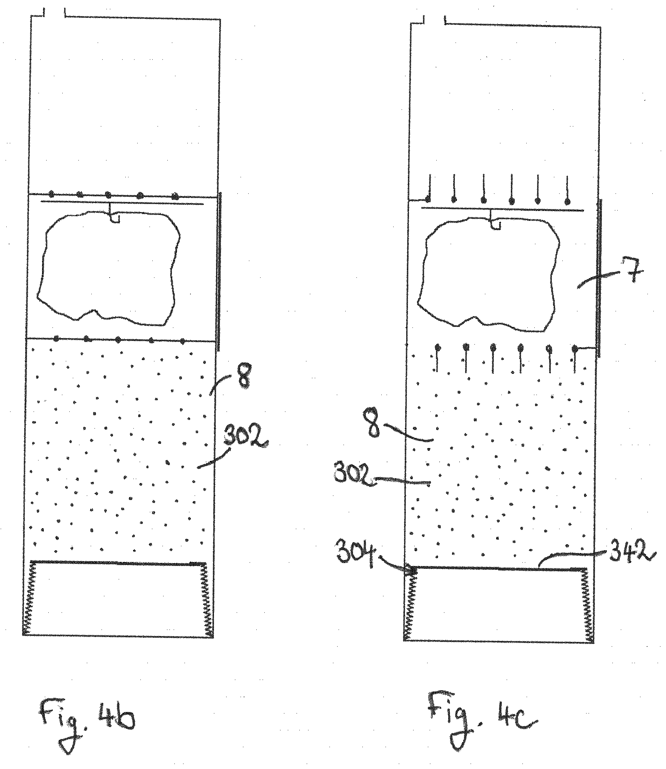

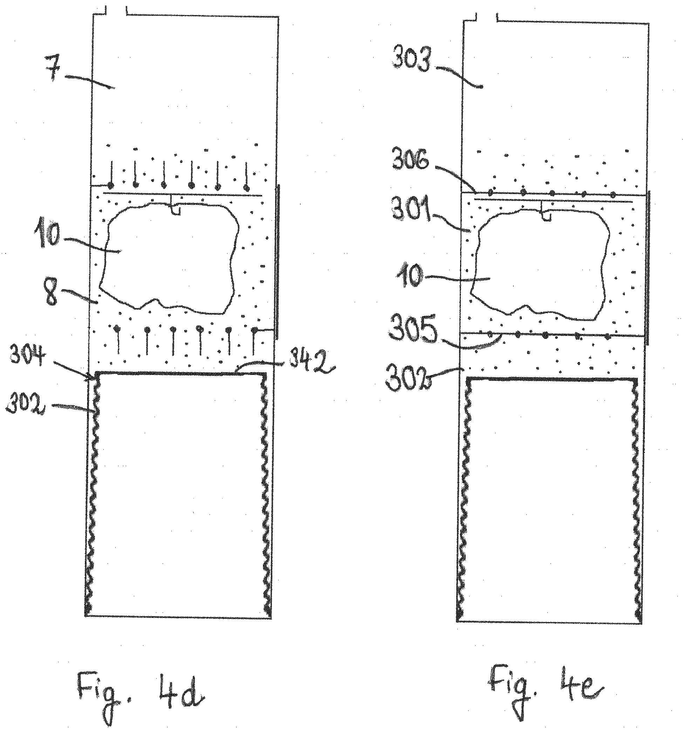

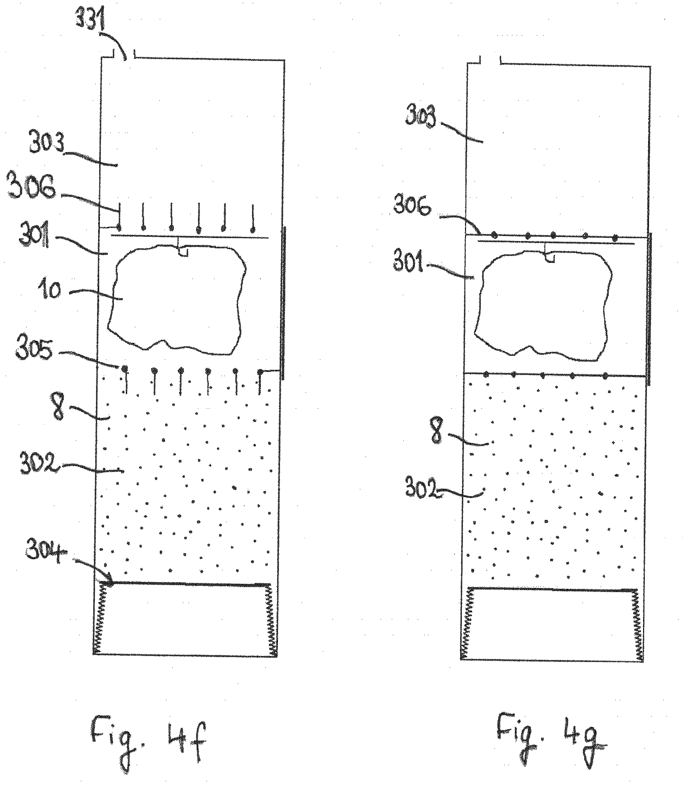

Die erste Kammer 301 ist mit der zweiten Kammer 302 durch eine verschließbare Verbindung 305 verbunden. Wenn diese geöffnet ist, so dient sie dazu, dass Lösemitteldampf von der zweiten Kammer 302 in die erste Kammer 301 eingeleitet werden kann, oder dass Lösemitteldampf von der ersten Kammer 301 in die zweite Kammer 302 zurückgeführt werden kann. In Fig. 4a ist die verschließbare Verbindung 305 geschlossen. Wie später in Figuren 4c, 4d und 4f zu sehen ist, kann die verschließbare Verbindung 305 beispielsweise durch aufklappbare Luken umgesetzt werden.

Die dritte Kammer 303 dient der Aufnahme des Gases oder Gasgemischs 7, das sich in der ersten Kammer 301 befindet. Dazu ist eine zweite verschließbare Verbindung 306 zwischen der ersten Kammer 301 und der dritten Kammer 303 vorgesehen. In Fig. 4a ist die zweite verschließbare Verbindung 306 geschlossen. Wie später in Figuren 4c, 4d und 4f zu sehen ist, kann die zweite verschließbare Verbindung 306 beispielsweise durch aufklappbare Luken umgesetzt werden. Wie im Falle des ersten Ausführungsbeispiels umfasst die dritte Kammer 303 vorzugsweise ein drittes Heizmittel (nicht gezeigt). In Fig. 4a ist des Weiteren ein Auslass 331 gezeigt, über den das Gas oder Gasgemisch 7, oder auch Lösemitteldampf, die sich in der dritten Kammer 303 befinden, abgesaugt werden kann. Der Auslass 331 dient zweckmäßig auch dazu, dass Gas oder Gasgemisch 7 aus der dritten Kammer 303 verdrängt werden kann. Der Auslass 331 kann beispielsweise durch ein Überströmventil realisiert werden.

In den Figuren 4a-4g wird ein erfindungsgemäßes Verfahren zur chemischen Glättung eines durch selektives schichtweises Verfestigen eines Aufbaumaterials hergestellten Kunststoffteils 10 unter Verwendung der Vorrichtung 300 gemäß dem dritten Ausführungsbeispiel beschrieben.

Figur 4a zeigt auch einen Schritt des Verfahrens zur chemischen Glättung des Kunststoffteils 10 mit Hilfe der Vorrichtung 300. In Fig. 4a wurde das zu glättende Kunststoffteil 10 in der ersten Kammer 301 positioniert. Die erste Kammer 301 ist mit einem Gas oder Gasgemisch 7 gefüllt. Die erste Kammer 301, und damit das Kunststoffteil 10, wird auf eine erste Temperatur temperiert. Dieser Schritt entspricht dem in Fig. 2a gezeigten Schritt, dessen Beschreibung auch im Hinblick auf Fig. 4a entsprechend gilt, und worauf verwiesen wird.

In Fig. 4b wurde Lösemitteldampf 8 in die zweiten Kammer 302 gefüllt. Die zweite Kammer 302 wird auf eine zweite Temperatur temperiert. Der Lösemitteldampf 8 wird damit zumindest annährend auf die zweite Temperatur temperiert. Der Schritt des Füllens der zweiten Kammer 302 mit Lösemitteldampf kann entsprechend zu dem in Fig. 2b im Zusammenhang mit dem ersten Ausführungsbeispiel gezeigten Schritt erfolgen, worauf Bezug genommen wird.

In Figuren 4c und 4d ist das Einleiten des Lösemitteldampfes 8 von der zweiten Kammer 302 in die erste Kammer 301 gezeigt. Zunächst werden dazu sowohl die verschließbare Verbindung 305 zwischen erster Kammer 301 und zweiter Kammer 302, als auch die zweite verschließbare Verbindung 306 zwischen erster Kammer 301 und dritter Kammer 303 geöffnet. In Fig. 4c befindet sich das Antriebselement 304 in der Ausgangsposition. Zum Einleiten des Lösemitteldampfes 8 von der zweiten Kammer 302 in die erste Kammer 301 wird das Antriebselement 304 in die Endposition überführt; die Endposition ist in Fig. 4d gezeigt. Das Überführen des Antriebselements 304 bewirkt, dass das dem Lösemitteldampf 8 in der zweiten Kammer 302 zur Verfügung stehende Volumen verringert wird. Der Stempel 342 des Antriebselements 304 treibt bzw. transportiert bzw. drängt den Lösemitteldampf 8 von der zweiten Kammer 302 in die erste Kammer 301. Der in die erste Kammer 301 einströmende Lösemitteldampf 8 verdrängt das Gas oder Gasgemisch 7 aus der ersten Kammer 301. Gas oder Gasgemisch 7 wird von der ersten Kammer 301 in die dritte Kammer 303 getrieben. Dieser letztgenannte Vorgang wird dadurch begünstigt, wenn die Dichte des Lösemitteldampfes 8 größer ist als die Dichte des Gases oder Gasgemischs 7 in der ersten Kammer 301. Denn dadurch erfährt das Gas oder Gasgemisch 7 eine Auftriebskraft, die die Verdrängung des Gases oder Gasgemischs 7 aus der ersten Kammer 301 in die dritte Kammer 303 begünstigt.

In Fig. 4d ist die erste Kammer 301 nahezu vollständig mit Lösemitteldampf 8 gefüllt bzw. geflutet. Das Kunststoffteil 10 ist nun vollständig von Lösemitteldampf 8 umgeben.

In Fig. 4e ist gezeigt, dass die verschließbare Verbindung 305 zwischen erster Kammer 301 und zweiter Kammer 302 sowie die zweite verschließbare Verbindung 306 zwischen erster Kammer 301 und dritter Kammer 303 geschlossen sind. Das Kunststoffteil 10 ist nahezu vollständig von Lösemitteldampf 8 umgeben. Entsprechend der Beschreibung von Fig. 2e im Zusammenhang mit dem ersten Ausführungsbeispiel wird der Lösemitteldampf 8 für eine bestimmte Zeitdauer auf das Kunststoffteil 10 einwirken gelassen. Dadurch, dass die Temperatur des Kunststoffteils 10 bzw. dessen Oberfläche annähernd der ersten Temperatur entspricht, kondensiert das Lösemittel in dem Lösemitteldampf 8 auf der Oberfläche des Kunststoffteils 10. Wie im Zusammenhang mit dem ersten Ausführungsbeispiel beschrieben, kann die chemische Glättung des Kunststoffteils 10 durch eine bestimmte Vorgabe der Temperaturdifferenz zwischen erster Kammer 301 und zweiter Kammer 302, der Konzentration des Lösemittels im Lösemitteldampf 8 und der bestimmten Zeitdauer, während der der Lösemitteldampf 8 auf das Kunststoffteil 10 einwirken gelassen wird, kontrolliert werden. Für weitere Einzelheiten wird auf das erste Ausführungsbeispiel Bezug genommen.

In Fig. 4f ist das Abführen bzw. Zurückführen des Lösemitteldampfes 8 von der ersten Kammer 301 in die zweite Kammer 302 gezeigt. Nachdem der Lösemitteldampf 8 für die bestimmte Zeitdauer auf das Kunststoffteil 10 eingewirkt hat, werden die verschließbare Verbindung 305 zwischen erster Kammer 301 und zweiter Kammer 302 sowie die zweite verschließbare Verbindung 306 zwischen erster Kammer 301 und dritter Kammer 303 geöffnet. Das Antriebselement 304 ist von der Endposition in die in Fig. 4f gezeigte Ausgangsposition überführt worden. Dadurch wird das Volumen der zweiten Kammer 302 wieder vergrößert. Damit steht für den Lösemitteldampf 8 wieder mehr Volumen zur Verfügung. Lösemitteldampf 8 größerer Dichte als Luft sinkt in die zweite Kammer 302 zurück. Gas oder Gasgemisch 7, vorzugsweise Luft 7, mit bevorzugt geringerer Dichte als jener des Lösemitteldampfes 8, kann zusätzlich durch den Auslass 331 in die dritte Kammer 303 eingeleitet werden bzw. hereinströmen. Dies hat zur Folge, dass das Gas oder Gasgemisch 7, bevorzugt die leichtere hereinströmende Luft, bei geöffneter zweiter verschließbarer Verbindung 306 den schwereren Lösemitteldampf 8 weiter in die zweite Kammer 302 zurückdrängt.

In Fig. 4g ist der Trocknungsprozess gezeigt. Die verschließbare Verbindung 305 zwischen erster Kammer 301 und zweiter Kammer 302 ist wieder geschlossen, um zu verhindern, dass Lösemitteldampf 8 aus der zweiten Kammer 302 in die erste Kammer 301 eindringt. Die zweite verschließbare Verbindung 306 zwischen erster Kammer 301 und dritter Kammer 303 ist ebenfalls geschlossen, um zu verhindern, dass Lösemitteldampf 8, der während des Trocknungsprozesses entsteht, in die dritte Kammer 303 eindringt. Zum Trocknen verbleibt das geglättete Kunststoffteil 10 in der ersten Kammer 301. Die im Zusammenhang mit dem in Figuren 2h und 2i gezeigten Trocknungsprozess gemäß erstem Ausführungsbeispiel gemachten Ausführungen gelten entsprechend für den Trocknungsprozess gemäß dem dritten Ausführungsbeispiel.

Der Glättungsprozess kann in mehreren Durchläufen erfolgen, entsprechend den Ausführungen zum ersten Ausführungsbeispiel.

Das Entfernen des geglätteten Kunststoffobjekts (nicht gezeigt) aus der Vorrichtung des dritten Ausführungsbeispiels erfolgt analog zu der Beschreibung von Figuren 2j und 2k und wird hier deshalb nicht mehr wiederholt.

### Liste der Bezugszeichen

- 100: Vorrichtung zum chemischen Glätten gemäß dem ersten Ausführungsbeispiel
- 1: erste Kammer
- 2: zweite Kammer
- 3: dritte Kammer
- 4: Antriebselement
- 5: verschließbare Verbindung zwischen erster Kammer 1 und zweiter Kammer 2
- 6: zweite verschließbare Verbindung zwischen erster Kammer 1 und dritter Kammer 3
- 7: Gas oder Gasgemisch / Luft
- 8: Lösemitteldampf
- 10: Kunststoffteil
- 11: Positionierungsmittel
- 12: Haken des Positionierungsmittels 11
- 13: Luke der ersten Kammer 1
- 14: erste Homogenisierungsvorrichtung / erste Umwälzvorrichtung
- 15: Absaugvorrichtung
- 16: verschließbare Verbindung zur Absaugvorrichtung 15
- 17: geneigte Innenwand / Bodenfläche der ersten Kammer 1
- 18: Innenflächen / Inneres des Kunststoffteils 10
- 19: Einleitvorrichtung zum Einleiten des Lösemitteldampfes 8 in das Innere des Kunststoffteils 10
- 191: Verbindungselement der Einleitvorrichtung 19
- 101: erster Bereich der ersten Kammer 1
- 102: zweiter Bereich der ersten Kammer 1
- 21: zweite Homogenisierungsvorrichtung / zweite Umwälzvorrichtung
- 22: Auslass der zweiten Kammer 2
- 23: Bodenfläche der zweiten Kammer 2
- 31: Auslass der dritten Kammer 3
- 41: elastisches Isolierelement / Faltenbalg des Antriebselements 4
- 42: Stempel des Antriebselements 4
- 200: Vorrichtung zum chemischen Glätten gemäß dem zweiten Ausführungsbeispiel
- 300: Vorrichtung zum chemischen Glätten gemäß dem dritten Ausführungsbeispiel
- 301: erste Kammer der Vorrichtung 300
- 302: zweite Kammer der Vorrichtung 300
- 303: dritte Kammer der Vorrichtung 300
- 304: Antriebselement der Vorrichtung 300
- 305: verschließbare Verbindung zwischen erster Kammer 301 und zweiter Kammer 302
- 306: zweite verschließbare Verbindung zwischen erster Kammer 301 und dritter Kammer 303
- 311: Positionierungsmittel der Vorrichtung 300
- 312: Haken des Positionierungsmittels 311
- 313: Luke der ersten Kammer 301
- 331: Auslass der dritten Kammer 303
- 341: elastisches Isolierelement / Faltenbalg des Antriebselements 304
- 342: Stempel des Antriebselements 304

## Patentansprüche

1. Verfahren zum chemischen Glätten eines Kunststoffteils (10), umfassend die folgenden Schritte:
- Positionieren des Kunststoffteils (10) in einer ersten (1, 301) mit einem Gas oder Gasgemisch (7) gefüllten Kammer;
- Füllen einer zweiten Kammer (2, 302) mit einem Lösemitteldampf (8), der ein Lösemittel umfasst,
wobei eine verschließbare Verbindung (5, 305), welche die erste Kammer (1, 301) und die zweite Kammer (2, 302) verbindet, geschlossen ist;
- Temperieren der ersten Kammer (1, 301) auf eine erste Temperatur mithilfe eines ersten Heizmittels, um damit das Kunststoffteil (10) zumindest annähernd auf die erste Temperatur zu temperieren;
- Temperieren der zweiten Kammer (2, 302) auf eine zweite Temperatur mithilfe eines zweiten Heizmittels, um damit den Lösemitteldampf (8) zumindest annähernd auf die zweite Temperatur zu temperieren;
- Öffnen der verschließbaren Verbindung (5, 305) und Einleiten des Lösemitteldampfes (8) von der zweiten Kammer (2, 302) in die erste Kammer (1, 301);
wobei der Schritt des Einleitens des Lösemitteldampfes (8) von der zweiten Kammer (2, 302) in die erste Kammer (1, 301) umfasst, dass das Volumen der zweiten Kammer (2, 302) verringert wird;
- Einwirkenlassen des auf die zweite Temperatur temperierten Lösemitteldampfes (8) auf das Kunststoffteil (10) für eine bestimmte Zeitdauer,
wobei das Einwirkenlassen des Lösemitteldampfes (8) auf das Kunststoffteil (10) bewirkt, dass eine äußere Schicht des Kunststoffteils (10) verflüssigt wird; und
- Abführen zumindest eines Teils des Lösemitteldampfes (8) nach der bestimmten Zeitdauer,
wobei das Kunststoffteil (10) vom Beginn des Temperierens des Kunststoffteils bis zum Abschluss des Abführens des Lösemitteldampfes (8) örtlich ruht.

2. Verfahren nach Anspruch 1, wobei der Schritt des Füllens der zweiten Kammer (2, 302) umfasst:
- Einbringen einer bestimmten Menge an Lösemittel in die zweite Kammer (2, 302);
- Verdampfen des Lösemittels in der zweiten Kammer (2, 302), um damit einen entsprechenden bestimmten Sättigungsgrad des Lösemitteldampfes (8) einzustellen.

3. Verfahren nach einem der Ansprüche 1 oder 2, wobei der Schritt des Abführens zumindest eines Teils des Lösemitteldampfes (8) umfasst:
- Abführen zumindest eines Teils des Lösemitteldampfes (8) von der ersten Kammer (1, 301) in die zweite Kammer (2, 302) nach der bestimmten Zeitdauer.

4. Verfahren nach einem der vorhergehenden Ansprüche, weiter den folgenden Schritt umfassend:
- Trocknen des Kunststoffteils (10) nach dem Abführen des Lösemitteldampfes (8),
wobei das Kunststoffteil (10) während des Trocknens weiterhin örtlich ruht.

5. Verfahren nach einem der vorhergehenden Ansprüche, wobei das Füllen der zweiten Kammer (2, 302) mit dem Lösemitteldampf (8) umfasst, dass der Lösemitteldampf (8) in der zweiten Kammer (2, 302) homogenisiert wird.

6. Verfahren nach einem der vorhergehenden Ansprüche, wobei der Schritt des Abführens zumindest eines Teils des Lösemitteldampfes (8) umfasst: Einleiten von Gas oder Gasgemisch (7) in die erste Kammer (1, 301).

7. Verfahren nach einem der vorhergehenden Ansprüche,
wobei die Schritte vom Temperieren des Kunststoffteils (10) bis zum Abführen zumindest eines Teils des Lösemitteldampfes (8) mehrmals durchlaufen werden, und
wobei das Kunststoffteil (10) während des mehrmaligen Durchlaufens der Schritte örtlich ruht.

8. Verfahren nach Anspruch 7, wobei bei jedem Durchlaufen die bestimmte Zeitdauer, während der der Lösemitteldampf (8) auf das Kunststoffteil (10) einwirken gelassen wird, unterschiedlich gewählt wird.

9. Verfahren nach einem der vorhergehenden Ansprüche, wobei der Lösemitteldampf (8) mit dem Lösemittel gesättigt ist.

10. Verfahren nach einem der vorhergehenden Ansprüche, wobei die erste Temperatur derart gewählt ist, dass die Dichte des Gases oder Gasgemischs (7) vor dem Einleiten des Lösemitteldampfes (8) geringer ist als die Dichte des Lösemitteldampfes (8) in der zweiten Kammer (2, 302).

11. Vorrichtung (100, 200, 300) zum chemischen Glätten eines Kunststoffteils (10), umfassend:
- eine erste Kammer (1, 301), die mit einem Gas oder Gasgemisch (7) befüllbar ist,
ein Positionierungsmittel (11) zur Aufnahme des Kunststoffteils (10) sowie
ein erstes Heizmittel zum Temperieren der ersten Kammer (1, 301) auf eine erste Temperatur aufweist;
- eine zweite Kammer (2, 302) zur Aufnahme eines Lösemitteldampfes (8), der bei Einwirken auf das Kunststoffteil (10) bewirkt, dass eine äußere Schicht des Kunststoffteils (10) verflüssigt wird,
die ein zweites Heizmittel zum Temperieren der zweiten Kammer (2, 302) auf eine zweite Temperatur aufweist; und
- ein Antriebselement (4, 304);
wobei die erste Kammer (1, 301) mit der zweiten Kammer (2, 302) durch eine verschließbare Verbindung (5, 305) verbunden ist,
wobei das Antriebselement (4, 304) derart von einer Ausgangsposition in eine Endposition überführbar ist, dass die Überführung des Antriebselements (4, 304) von der Ausgangsposition in die Endposition bewirkt, dass der Lösemitteldampf (8) von der zweiten Kammer (2, 302) in die erste Kammer (1, 301) eingeleitet wird, wenn sich Lösemitteldampf (8) in der zweiten Kammer (2, 302) befindet und die verschließbare Verbindung (5, 305) zwischen der ersten Kammer (1, 301) und der zweiten Kammer (2, 302) geöffnet ist.

12. Vorrichtung (100, 200, 300) nach Anspruch 11, weiter eine dritte Kammer (3, 303) aufweisend, die mit der ersten Kammer (1, 301) durch eine zweite verschließbare Verbindung (6, 306) verbunden ist, wobei die dritte Kammer (3, 303) zur Aufnahme von zumindest eines Teils des Gases oder Gasgemischs (7) aus der ersten Kammer (1, 301) vorgesehen ist, wenn das das Antriebselement (4, 304) von der Ausgangsposition in die Endposition überführt wird, und wenn die erste Kammer (1, 301) mit Gas oder Gasgemisch (7) befüllt ist.

13. Vorrichtung (100, 200, 300) nach Anspruch 11 oder 12, wobei das Überführen des Antriebselements (4, 304) von der Ausgangsposition in die Endposition bewirkt, dass das Volumen der zweiten Kammer (2, 302) verkleinert wird.

14. Vorrichtung (100, 200) nach einem der Ansprüche 11 bis 13, wobei die erste Kammer (1) eine geneigte Innenwand (17) aufweist, die derart ausgelegt ist, dass zumindest ein Teil des Lösemitteldampfes (8) von der ersten Kammer (1) in die zweite Kammer (2) abgeführt wird, wenn sich Lösemitteldampf (8) in der ersten Kammer (1) befindet, die verschließbare Verbindung (5) zwischen der ersten Kammer (1) und der zweiten Kammer (2) geöffnet ist und das Antriebselement (4) von der Endposition in die Ausgangsposition überführt wird.

15. Vorrichtung (100, 200, 300) nach einem der Ansprüche 11 bis 14, wobei das Überführen des Antriebselements (4, 304) von der Endposition in die Ausgangsposition bewirkt, dass zumindest ein Teil des Lösemitteldampfes (8) von der ersten Kammer (1, 301) in die zweite Kammer (2, 302) abgeführt wird, wenn sich Lösemitteldampf (8) in der ersten Kammer (1, 301) befindet und die verschließbare Verbindung (5, 305) zwischen der ersten Kammer (1, 301) und der zweiten Kammer (2, 302) geöffnet ist.

16. Vorrichtung (200) nach einem der Ansprüche 11 bis 15, wobei die erste Kammer (1) eine Einleitvorrichtung (19) umfasst, die dazu ausgelegt ist mit dem Kunststoffteil (10) verbunden zu werden, und den Lösemitteldampf (8) in das Innere (18) des Kunststoffteils (10) einzuleiten.

17. Verwendung einer Vorrichtung (100, 200, 300) nach einem der Ansprüche 11 bis 16 zum chemischen Glätten eines Kunststoffteils (10).

18. Verfahren nach einem der Ansprüche 1 bis 10, Vorrichtung (100, 200, 300) nach einem der Ansprüche 11 bis 16, oder Verwendung nach Anspruch 17, wobei das Lösemittel aus der Gruppe bestehend aus Ameisensäure, Aceton und Tetrahydrofuran, THF, gewählt ist.

## Claims

1. A process for chemical smoothing of a plastic part (10), comprising the following steps:
- positioning the plastic part (10) in a first chamber (1, 301) filled with a gas or a gas mixture (7);
- filling a second chamber (2, 302) with a solvent vapour (8) comprising a solvent;
wherein a closable connection (5, 305) connecting the first chamber (1, 301) and the second chamber (2, 302) is closed;
- temperature-controlling the first chamber (1, 301) to a first temperature by means of a first heating means so as to temperature-control the plastic part (10) at least approximately to the first temperature;
- temperature-controlling the second chamber (2, 302) to a second temperature by means of a second heating means so as to temperature-control the solvent vapour (8) at least approximately to the second temperature;
- opening the closable connection (5, 305) and introducing the solvent vapour (8) from the second chamber (2, 302) into the first chamber (1, 301);
wherein the step of introducing the solvent vapour (8) from the second chamber (2, 302) into the first chamber (1, 301) comprises that the volume of the second chamber (2, 302) is reduced;
- subjecting the plastic part (10) to the solvent vapour (8) temperature-controlled to the second temperature for a particular duration,
wherein subjecting the plastic part (10) to the solvent vapour (8) has the result that an outer layer of the plastic part (10) is liquefied; and
- discharging at least a portion of the solvent vapour (8) after the particular duration,
wherein the plastic part (10) is stationary from commencement of the temperature-controlling of the plastic part until termination of the discharging of the solvent vapour (8).

2. The process according to claim 1, wherein the step of filling the second chamber (2, 302) comprises:
- introducing a particular amount of solvent into the second chamber (2, 302);
- evaporating the solvent in the second chamber (2, 302) to thus adjust an appropriate particular degree of saturation of the solvent vapour (8).

3. The process according to any of claims 1 or 2, wherein the step of discharging at least a portion of the solvent vapour (8) comprises:
- discharging at least a portion of the solvent vapour (8) from the first chamber (1, 301) into the second chamber (2, 302) after the particular duration.

4. The process according to any of the preceding claims, further comprising the following step:
- drying the plastic part (10) after discharging the solvent vapour (8),
wherein the plastic part (10) is still stationary during drying.

5. The process according to any of the preceding claims, wherein the filling of the second chamber (2, 302) with the solvent vapour (8) comprises that the solvent vapour (8) is homogenised in the second chamber (2, 302).

6. The process according to any of the preceding claims, wherein the step of discharging at least a portion of the solvent vapour (8) comprises: introducing gas or gas mixture (7) into the first chamber (1, 301).

7. The process according to any of the preceding claims,
wherein the steps from temperature-controlling the plastic part (10) to discharging at least a portion of the solvent vapour (8) are run through repeatedly, and
wherein the plastic part (10) is stationary during the repeated running through of the steps.

8. The process according to claim 7, wherein, with each running through, the particular duration for which the plastic part (10) is subjected to the solvent vapour (8) is chosen differently.

9. The process according to any of the preceding claims, wherein the solvent vapour (8) is saturated with the solvent.

10. The process according to any of the preceding claims, wherein the first temperature is chosen such that the density of the gas or gas mixture (7) prior to the introduction of the solvent vapour (8) is lower than the density of the solvent vapour (8) in the second chamber (2, 302).

11. An apparatus (100, 200, 300) for chemical smoothing of a plastic part (10), comprising:
- a first chamber (1, 301) adapted to be filled with a gas or gas mixture (7),
comprising positioning means (11) for receiving the plastic part (10) as well as
first heating means for temperature-controlling the first chamber (1, 301) to a first temperature;
- a second chamber (2, 302) for receiving a solvent vapour (8) which, when acting on the plastic part (10), causes an outer layer of the plastic part (10) to be liquefied,
comprising second heating means for temperature-controlling the second chamber (2, 302) to a second temperature; and
- a drive element (4, 304);
wherein the first chamber (1, 301) is connected with the second chamber (2, 302) by a closable connection (5, 305),
wherein the drive element (4, 304) is transferable from an initial position to an end position such that the transferring of the drive element (4, 304) from the initial position to the end position has the result that the solvent vapour (8) is introduced from the second chamber (2, 302) into the first chamber (1, 301) if solvent vapour (8) is present in the second chamber (2, 302) and the closable connection (5, 305) between the first chamber (1, 301) and the second chamber (2, 302) is open.

12. The apparatus (100, 200, 300) according to claim 11, further comprising a third chamber (3, 303) which is connected with the first chamber (1, 301) by a second closable connection (6, 306), wherein the third chamber (3, 303) is provided for receiving at least a portion of the gas or gas mixture (7) from the first chamber (1, 301) if the drive element (4, 304) is transferred from the initial position to the end position and if the first chamber (1, 301) is filled with gas or gas mixture (7).

13. The apparatus (100, 200, 300) according to claims 11 or 12, wherein the transferring of the drive element (4, 304) from the initial position to the end position has the result that the volume of the second chamber (2, 302) is reduced.

14. The apparatus (100, 200, 300) according to any of claims 11 to 13, wherein the first chamber (1) comprises an inclined inner wall (17) which is configured such that at least a portion of the solvent vapour (8) is discharged from the first chamber (1) into the second chamber (2) if solvent vapour (8) is present in the first chamber (1), the closable connection (5) between the first chamber (1) and the second chamber (2) is open, and the drive element (4) is transferred from the end position to the initial position.

15. The apparatus (100, 200, 300) according to any of claims 11 to 14, wherein the transferring of the drive element (4, 304) from the end position to the initial position has the result that at least a portion of the solvent vapour (8) is discharged from the first chamber (1, 301) into the second chamber (2, 302) if solvent vapour (8) is present in the first chamber (1, 301) and the closable connection (5, 305) between the first chamber (1, 301) and the second chamber (2, 302) is open.

16. The apparatus (100, 200, 300) according to any of claims 11 to 15, wherein the first chamber (1) comprises an introduction device (19) configured to be connected with the plastic part (10) and to introduce the solvent vapour (8) into the interior (18) of the plastic part (10).

17. A use of an apparatus (100, 200, 300) according to any of claims 11 to 16 for chemical smoothing of a plastic part (10).

18. The process according to any of claims 1 to 10, the apparatus (100, 200, 300) according to any of claims 11 to 16, or the use according to claim 17, wherein the solvent is chosen from the group consisting of formic acid, acetone, and tetrahydrofuran, THF.

## Revendications

1. Procédé de lissage chimique d'une pièce en matière plastique (10), comprenant les étapes suivantes :
- positionnement de la pièce en matière plastique (10) dans une première chambre (1, 301) remplie d'un gaz ou d'un mélange de gaz (7) ;
- remplissage d'une deuxième chambre (2, 302) avec une vapeur de solvant (8) qui comprend un solvant,
dans lequel une liaison obturable (5, 305) reliant la première chambre (1, 301) et la deuxième chambre (2, 302) est fermée ;
- mise de la première chambre (1, 301) à une première température à l'aide d'un premier moyen de chauffage, pour ainsi mettre la pièce en matière plastique (10) au moins approximativement à la première température ;
- mise de la deuxième chambre (2, 302) à une deuxième température à l'aide d'un deuxième moyen de chauffage, pour ainsi mettre la vapeur de solvant (8) au moins approximativement à la deuxième température ;
- ouverture de la liaison obturable (5, 305) et introduction de la vapeur de solvant (8) de la deuxième chambre (2, 302) dans la première chambre (1, 301) ;
dans lequel l'étape d'introduction de la vapeur de solvant (8) de la deuxième chambre (2, 302) dans la première chambre (1, 301) comprend une réduction du volume de la deuxième chambre (2, 302) ;
- action de faire agir la vapeur de solvant (8) mise à la deuxième température sur la pièce en matière plastique (10) pendant une durée déterminée,
dans lequel l'action de faire agir la vapeur de solvant (8) sur la pièce en matière plastique (10) a pour effet de liquéfier une couche extérieure de la pièce en matière plastique (10) ; et
- évacuation d'au moins une partie de la vapeur de solvant (8) après la durée déterminée,
dans lequel la pièce en matière plastique (10) est localement au repos depuis le début de la mise à température de la pièce en matière plastique à la fin de l'évacuation de la vapeur de solvant (8).

2. Procédé selon la revendication 1, dans lequel l'étape de remplissage de la deuxième chambre (2, 302) comprend :
- l'introduction d'une quantité déterminée de solvant dans la deuxième chambre (2, 302) ;
- l'évaporation du solvant dans la deuxième chambre (2, 302) afin d'établir ainsi un degré de saturation déterminé correspondant de la vapeur de solvant (8).

3. Procédé selon l'une des revendications 1 ou 2, dans lequel l'étape d'évacuation d'au moins une partie de la vapeur de solvant (8) comprend :
- l'évacuation d'au moins une partie de la vapeur de solvant (8) de la première chambre (1, 301) vers la deuxième chambre (2, 302) après la durée déterminée.

4. Procédé selon l'une des revendications précédentes, comprenant en outre l'étape suivante :
- séchage de la pièce en matière plastique (10) après l'évacuation de la vapeur de solvant (8),
dans lequel a pièce en matière plastique (10) continue à être localement au repos pendant le séchage.

5. Procédé selon l'une des revendications précédentes, dans lequel l'étape de remplissage de la deuxième chambre (2, 302) avec la vapeur de solvant (8) comprend l'homogénéisation de la vapeur de solvant (8) dans la deuxième chambre (2, 302).

6. Procédé selon l'une des revendications précédentes, dans lequel l'étape d'évacuation d'au moins une partie de la vapeur de solvant (8) comprend l'introduction de gaz ou d'un mélange de gaz (7) dans la première chambre (1, 301).

7. Procédé selon l'une des revendications précédentes,
dans lequel les étapes allant de la mise à température de la pièce en matière plastique (10) à l'évacuation d'au moins une partie de la vapeur de solvant (8) sont parcourues plusieurs fois, et
dans lequel la pièce en matière plastique (10) est localement au repos pendant que les étapes sont parcourues plusieurs fois.

8. Procédé selon la revendication 7, dans lequel, à chaque parcours, la durée déterminée pendant laquelle on fait agir la vapeur de solvant (8) sur la pièce en matière plastique (10) est choisie différente.

9. Procédé selon l'une des revendications précédentes, dans lequel la vapeur de solvant (8) est saturée en solvant.

10. Procédé selon l'une des revendications précédentes, dans lequel la première température est choisie de manière à ce que la densité du gaz ou du mélange de gaz (7) avant l'introduction de la vapeur de solvant (8) soit inférieure à la densité de la vapeur de solvant (8) dans la deuxième chambre (2, 302).

11. Dispositif (100, 200, 300) pour le lissage chimique d'une pièce en matière plastique (10), comprenant :
- une première chambre (1, 301) susceptible d'être remplie d'un gaz ou d'un mélange de gaz (7), qui comprend un moyen de positionnement (11) pour la réception de la pièce en matière plastique (10) ainsi qu'un premier moyen de chauffage pour mettre la première chambre (1, 301) à une première température ;
- une deuxième chambre (2, 302) destinée à recevoir une vapeur de solvant (8) qui, en agissant sur la pièce en matière plastique (10), a pour effet de liquéfier une couche extérieure de la pièce en matière plastique (10), qui comprend un deuxième moyen de chauffage pour mettre la deuxième chambre (2, 302) à une deuxième température ; et
- un élément d'entraînement (4, 304) ;
dans lequel la première chambre (1, 301) est reliée à la deuxième chambre (2, 302) par une liaison obturable (5, 305),
dans lequel l'élément d'entraînement (4, 304) peut être transféré d'une position initiale à une position finale de manière à ce que le transfert de l'élément d'entraînement (4, 304) de la position initiale à la position finale ait pour effet que la vapeur de solvant (8) soit introduite de la deuxième chambre (2, 302) dans la première chambre (1, 301) lorsque de la vapeur de solvant (8) se trouve dans la deuxième chambre (2, 302) et que la liaison obturable (5, 305) est ouverte entre la première chambre (1, 301) et la deuxième chambre (2, 302).

12. Dispositif (100, 200, 300) selon la revendication 11, comprenant en outre une troisième chambre (3, 303) qui est reliée à la première chambre (1, 301) par une deuxième liaison obturable (6, 306), dans lequel la troisième chambre (3, 303) est prévue pour recevoir au moins une partie du gaz ou du mélange de gaz (7) provenant de la première chambre (1, 301) lorsque l'élément d'entraînement (4, 304) est transféré de la position initiale à la position finale et lorsque la première chambre (1, 301) est remplie de gaz ou d'un mélange de gaz (7).

13. Dispositif (100, 200, 300) selon la revendication 11 ou 12, dans lequel le transfert de l'élément d'entraînement (4, 304) de la position initiale à la position finale a pour effet de réduire le volume de la deuxième chambre (2, 302).

14. Dispositif (100, 200) selon l'une des revendications 11 à 13, dans lequel la première chambre (1) comprend une paroi interne inclinée (17) qui est conçue pour évacuer au moins une partie de la vapeur de solvant (8) de la première chambre (1) vers la deuxième chambre (2) lorsque de la vapeur de solvant (8) se trouve dans la première chambre (1), que la liaison obturable (5) est ouverte entre la première chambre (1) et la deuxième chambre (2) et que l'élément d'entraînement (4) est transféré de la position finale à la position initiale.

15. Dispositif (100, 200, 300) selon l'une des revendications 11 à 14, dans lequel le transfert de l'élément d'entraînement (4, 304) de la position finale à la position initiale a pour effet qu'au moins une partie de la vapeur de solvant (8) est évacuée de la première chambre (1, 301) vers la deuxième chambre (2, 302) lorsque de la vapeur de solvant (8) se trouve dans la première chambre (1, 301) et que la liaison obturable (5, 305) est ouverte entre la première chambre (1, 301) et la deuxième chambre (2, 302).

16. Dispositif (200) selon l'une des revendications 11 à 15, dans lequel la première chambre (1) comprend un dispositif d'introduction (19) qui est conçu pour être relié à la pièce en matière plastique (10) et pour introduire la vapeur de solvant (8) à l'intérieur (18) de la pièce en matière plastique (10).

17. Utilisation d'un dispositif (100, 200, 300) selon l'une des revendications 11 à 16 pour le lissage chimique d'une pièce en matière plastique (10).

18. Procédé selon l'une des revendications 1 à 10, dispositif (100, 200, 300) selon l'une des revendications 11 à 16 ou utilisation selon la revendication 17, dans lequel/ laquelle le solvant est choisi dans le groupe constitué par l'acide formique, l'acétone et le tétrahydrofurane, THF.
